(19) Europäisches Patentamt
European Patent Office
Office européen des brevets

(11) **EP 4 407 346 A1**

(12) **EUROPEAN PATENT APPLICATION**
published in accordance with Art. 153(4) EPC

(43) Date of publication:
**31.07.2024 Bulletin 2024/31**

(21) Application number: **21961656.2**

(22) Date of filing: **25.10.2021**

(51) International Patent Classification (IPC):
***G01S 13/88*** (2006.01)  ***H04B 1/50*** (2006.01)

(52) Cooperative Patent Classification (CPC):
**G01S 13/88; H04B 1/50**

(86) International application number:
**PCT/CN2021/126105**

(87) International publication number:
**WO 2023/070267 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• ZHOU, Mu
  **Shenzhen, Guangdong 518129 (CN)**
• WANG, Chenghao
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTRONIC DEVICE AND RELATED DEVICE**

(57)   An electronic device (1000) and a related device are provided. The electronic device (1000) includes a first antenna array (1011) and a second antenna array (1012). In a communication mode, transmission and reception of a communication signal are performed between the electronic device (1000) and a target device by using the first antenna array (1011). In a radar mode, radar transmitting beams are transmitted to a target object by using the first antenna array (1011). In the radar mode, a radar echo reflected by the target object is received by using the second antenna array (1012). This can increase a multiplexing rate of radar and communication antennas, and reduce an area occupied by the antennas.

FIG. 7

## Description

### TECHNICAL FIELD

Embodiments of this application relate to the field of radar technologies, and in particular, to an electronic device and a related device.

### BACKGROUND

First, with rapid development of assisted vehicle driving toward autonomous driving, an in-vehicle autonomous driving system has an increasingly high requirement for environment sensing. A vehicle-mounted sensor is an important tool for sensing a surrounding environment in the in-vehicle autonomous driving system, and may include a camera, an ultrasonic radar, a millimeter-wave radar, a lidar, and the like.

With introduction and popularity of concepts of an internet of vehicles (internet of vehicle, IOV) and an intelligent transport system (intelligent transport system, ITS), a vehicle becomes an important carrier of various electronic devices. In addition to completing a basic driving task, the vehicle needs to sense a surrounding traffic environment by using a sensor like a millimeter-wave radar, and needs to transmit information in a traffic network, that is, perform communication. Based on this, a radar communication integration technology is proposed in the industry.

However, in conventional radar communication integration, radars and communication antennas occupy a large area, and production and manufacturing costs are high.

### SUMMARY

Embodiments of this application provide an electronic device and a related device, to increase a multiplexing rate of an antenna and reduce an area occupied by the antenna based on radar communication integration.

According to a first aspect, an embodiment of this application provides an electronic device, including a first antenna array and a second antenna array. In a communication mode, transmission and reception of a communication signal are performed between the electronic device and a target device by using the first antenna array. In a radar mode, radar transmitting beams are transmitted to a target object by using the first antenna array. In the radar mode, a radar echo reflected by the target object is received by using the second antenna array.

In an existing radar communication integration technology, a multiplexing rate of a radar antenna and a communication antenna are extremely low, and even two independent antenna arrays are used. As a result, the antenna occupies a large area, and production and manufacturing costs are high. However, in this embodiment of this application, when the device is in the communication mode, the device may perform transmission and reception of the communication signal by using a corresponding communication antenna (for example, the first antenna array); when the device is in the radar mode, the device may still transmit the radar transmitting beam by using the first antenna array, and receive, by using a corresponding radar receiving antenna (for example, the second antenna array), the radar echo corresponding to the transmitting beam. In this way, the device provided in this embodiment of this application can multiplex, in the radar mode, the communication antenna used in the communication mode to transmit the radar transmitting beam on a premise that radar communication integration is met. In short, a same antenna array may be used for both communication transmission and reception and radar detection. This greatly improves a multiplexing rate of the radar antenna and the communication antenna, reduce an area occupied by the antenna array, further reduce production costs, and meet an application requirements and a development trend of device integration, miniaturization, and lightweight.

In a possible implementation, in the radar mode, the radar transmitting beams are transmitted to the target object by using a part or all of the first antenna array.

In this embodiment of this application, when the device is in the radar mode, a part or all of communication antennas (for example, the first antenna array) may be multiplexed to transmit the radar transmitting beam. In other words, the multiplexing rate of the radar and communication antennas may be determined based on an actual situation and a requirement. This ensures flexibility of multiplexing the radar antenna and the communication antenna in this embodiment of this application.

In a possible implementation, the second antenna array is disposed around the first antenna array. The second antenna array includes a plurality of second antenna elements, and the plurality of second antenna elements are disposed adjacent to one or more vertices of the first antenna array. Alternatively, the plurality of second antenna elements may be disposed adjacent to one or more sides of the first antenna array.

In this embodiment of this application, the second antenna array may be disposed around the first antenna array as additional radar receiving antenna, for example, may be disposed near four vertices or four sides of the first antenna array. This can use a dense arrangement feature of the first antenna array used to implement a communication function, and increase an effective aperture of the radar antenna.

In a possible implementation, the first antenna array includes a plurality of first multiplexed antenna elements, and the plurality of first multiplexed antenna elements are multiplexed by the second antenna array. The plurality of first multiplexed antenna elements are disposed at one or more vertices of the first antenna array. Alternatively, the plurality of first multiplexed antenna elements are disposed on one or more sides of the first antenna array.

In this embodiment of this application, as described above, when the second antenna array is used as the radar receiving antenna additionally disposed near the first antenna array, a large degree of multiplexing between a radar transmitting antenna and a communication transmitting and receiving antenna is implemented. When the second antenna array is a part of the first antenna array (that is, the part or all of the first antenna array may be multiplexed to receive the radar echo), multiplexing between the radar transmitting antenna and the radar receiving antenna is further implemented. In this way, this embodiment of this application can maximum the multiplexing rate of the antenna. An antenna at the vertex or on the side is multiplexed, so that an effective aperture of the radar antenna can be increased, and a quantity of antennas and an area occupied by the antenna can be effectively reduced. This fully meets an application requirements and a development trend of integration, miniaturization, and lightweight of an integrated radar communication device.

In a possible implementation, the first antenna array includes a plurality of first antenna elements, the second antenna array includes the plurality of second antenna elements, each of the first antenna elements and each of the second antenna elements includes P antennas, and P is an integer greater than or equal to 1.

In this embodiment of this application, both the first antenna array and the second antenna array may include a plurality of antenna elements, and the antenna element may further include one or more antennas. For example, one antenna element can include four vertical series-fed patch antennas, to effectively improve channel quality.

In a possible implementation, the device includes a transmitting module and a receiving module. The transmitting module includes a plurality of transmitting circuits. Each transmitting circuit includes: a digital-to-analog converter, a frequency band filter, a frequency mixer, a subarray selection switch, and a power amplifier that are sequentially coupled. The power amplifier in each transmitting circuit is coupled to the first antenna element of the first antenna array. The receiving module includes a plurality of receiving circuits. Each receiving circuit includes a subarray selection switch, a low-noise amplifier, a frequency mixer, a frequency band filter, and an analog-to-digital converter that are sequentially coupled. The subarray selection switch in each receiving circuit is coupled to the second antenna element of the second antenna array. The frequency mixer in the transmitting circuit and the frequency mixer in the receiving circuit share one local oscillator.

In this embodiment of this application, the electronic device may include the corresponding transmitting module and receiving module, where the transmitting module may include the plurality of transmitting circuits, and correspondingly, the receiving module may include the plurality of receiving circuits. In this way, effective hardware circuit support can be provided for a radar multi-beam scanning (that is, transmitting a plurality of radar transmitting beams in different directions) solution proposed subsequently in this application, ensuring high efficiency and reliability of the radar mode in radar communication integration.

In a possible implementation, the transmitting module is configured to: in the radar mode, generate a plurality of radar transmitting waveforms, and separately allocate resources to the plurality of radar transmitting waveforms, where the resource allocation includes one or more of frequency resource allocation, coding resource allocation, time resource allocation, and space resource allocation; and configure a weight for each of the plurality of radar transmitting waveforms, form a plurality of radar transmitting beams in different directions by using the first antenna array, and transmit the plurality of radar transmitting beams in the different directions to the target object, where the plurality of radar transmitting beams are different from each other in at least one of a frequency resource, a coding resource, a time resource, and a space resource.

In the existing radar communication integration, a single-beam time-division scanning manner is usually used to detect a surrounding environment in a radar mode. This undoubtedly causes a low radar scanning velocity and low resolution, and cannot meet an actual requirement in a radar application process. In this embodiment of this application, when the electronic device is in the radar mode, the electronic device may configure the weight (for example, by multiplying by a weight vector) for each of the plurality of radar transmitting waveforms, and transmits, by using the first antenna array, the plurality of radar transmitting beams in the different directions to the target object, that is, performs multi-beam scanning, effectively improving radar scanning efficiency. In addition, when a quantity of radar transmitting beams is greater than one, the plurality of radar transmitting beams usually interfere with each other, affecting velocity measurement and range measurement results of the radar. Based on this, this embodiment of this application further allocates resources to the plurality of radar transmitting waveforms at a transmitting end, so that radar echoes corresponding to the plurality of radar transmitting beams can be subsequently separated at a receiving end based on the resource allocation, to suppress and even eliminate interference between beams. This can improve a radar scanning velocity through multi-beam scanning, and ensure radar detection accuracy. Further, frequency band allocation included in the resource allocation allows the plurality of beams to have different center frequency points, that is, the beams do not need a same center frequency point, so that a frequency point range can span a plurality of frequency bands.

In a possible implementation, the radar transmitting waveform is any one of a frequency-modulated continuous wave FMCW, a phase-modulated continuous wave PMCW, and an orthogonal frequency division multiplexing OFDM modulated wave.

In this embodiment of this application, the radar transmitting waveform may include a plurality of possible waveforms, to meet an operating requirement of an integrated radar communication device in the radar mode, and ensure operating reliability of the radar.

In a possible implementation, the space resource allocation includes transmitting array allocation, and the transmitting module is specifically configured to: select a $j^{th}$ first antenna subarray in the first antenna array by using a subarray selection switch in a $j^{th}$ transmitting circuit, and transmit a $j^{th}$ radar transmitting beam in the plurality of radar transmitting beams by using the $j^{th}$ first antenna subarray, where the $j^{th}$ first antenna subarray includes one or more first antenna elements, and j is an integer greater than or equal to 1.

In this embodiment of this application, the transmitting array allocation allows each radar transmitting beam to occupy different subarrays in a radar transmitting antenna array (for example, the first antenna array). This improves isolation between the radar transmitting beams, and further enhances a beam separation degree in another resource allocation manner. In addition, simple and convenient subarray selection may further reduce hardware complexity of the transmitting end.

In a possible implementation, the receiving module is configured to: in the radar mode, receive, by using the second antenna array, radar echoes that correspond to the plurality of radar transmitting beams and that are reflected by the target object, and separate, based on resource allocation corresponding to each of the plurality of radar transmitting beams, the radar echoes corresponding to the plurality of radar transmitting beams, to obtain a plurality of radar receiving beams in different directions; and obtain a plurality of range-Doppler maps corresponding to the different directions based on the plurality of radar receiving beams in the different directions.

In this embodiment of this application, the receiving end may separate the radar echoes corresponding to the plurality of radar transmitting beams based on the resource allocation, to suppress and even eliminate interference between the beams and obtain the corresponding plurality of radar receiving beams in the different directions. Further, the plurality of range-Doppler maps corresponding to the target object in the different directions may be obtained based on the plurality of radar receiving beams in the different directions, to obtain information such as a velocity, a range, and an orientation of the target object, that is, to complete velocity measurement, range measurement, and angle measurement. It may be understood that, as described above, in this embodiment of this application, there are the plurality of radar transmitting beams in different directions at the transmitting end. Therefore, when receiving the plurality of corresponding radar echoes that include different direction information, the receiving end may quickly and conveniently complete high-resolution angle measurement in a conventional radar based on the plurality of pieces of direction information. This greatly reduces calculation and processing complexity of the radar receiving end, that is, reduces workload and power consumption of the radar receiving end, and prevents device overheating and shutdown, and a potential hazard to driving safety.

In a possible implementation, the device further includes an artificial intelligence AI processing module, and the AI processing module is connected to the receiving module. The receiving module is further configured to send the plurality of range-Doppler maps to the AI processing module. The AI processing module is configured to: receive the plurality of range-Doppler maps, and obtain image pixel segmentation information of the target object based on the plurality of range-Doppler maps.

In this embodiment of this application, the obtained plurality of range-Doppler maps in the different directions may be input to the AI processing module, and image pixel segmentation information of a surrounding environment (for example, including the target object) is quickly and accurately output by using a deep learning network in the AI processing module. In addition, as described above, there may be frequency resources allocation in resource allocation of the plurality of radar transmitting beams. Therefore, frequency bands (or frequency points) used by the plurality of radar transmitting beams may be different. In an existing radar angle measurement technology, beams of a same frequency band are usually used, and different frequency bands usually cause inaccurate angle measurement. An AI technology is a technology based on a deep learning network, and can handle a highly nonlinear problem existing in beams of different frequency bands, that is, data of different directions and different frequency points may be correctly processed by using the AI technology. Therefore, in this embodiment of this application, the AI technology may further be combined, to further improve accuracy of radar angle measurement in a multi-beam scenario.

According to a second aspect, an embodiment of this application provides an electronic device. The electronic device may include: a communication unit, configured to: in a communication mode, perform transmission and reception of a communication signal between the electronic device and a target device by using a first antenna array; a radar transmitting unit, configured to: in a radar mode, transmit radar transmitting beams to a target object by using the first antenna array; and a radar receiving unit, configured to: in the radar mode, receive, by using a second antenna array, a radar echo reflected by the target object.

In a possible implementation, the radar transmitting unit is specifically configured to: in the radar mode, transmit the radar transmitting beam to the target object by multiplexing a part or all of the first antenna array.

In a possible implementation, the second antenna array includes four second antenna subarrays. The four second antenna subarrays are respectively located around four vertices of the first antenna array, or the four second antenna subarrays are respectively located outside four sides of the first antenna array.

In a possible implementation, the second antenna array includes four second antenna subarrays, and the four second antenna subarrays are four first antenna subarrays in the first antenna array. The four first antenna subarrays are respectively located at four vertices of the first antenna array, or the four first antenna subarrays are respectively located on four sides of the first antenna array.

In a possible implementation, the first antenna array includes a plurality of first antenna elements, the second antenna array includes the plurality of second antenna elements, each of the first antenna elements and each of the second antenna elements includes P antennas, and P is an integer greater than or equal to 1.

In a possible implementation, the device includes a transmitting module and a receiving module. The transmitting module includes a plurality of transmitting circuits. Each transmitting circuit includes: a digital-to-analog converter, a frequency band filter, a frequency mixer, a subarray selection switch, and a power amplifier that are sequentially coupled. The power amplifier in each transmitting circuit is coupled to the first antenna element of the first antenna array. The receiving module includes a plurality of receiving circuits. Each receiving circuit includes a subarray selection switch, a low-noise amplifier, a frequency mixer, a frequency band filter, and an analog-to-digital converter that are sequentially coupled. The subarray selection switch in each receiving circuit is coupled to the second antenna element of the second antenna array. The frequency mixer in the transmitting circuit and the frequency mixer in the receiving circuit share one local oscillator.

In a possible implementation, the radar transmitting unit is specifically configured to: by using the transmitting module, in the radar mode, generate a plurality of radar transmitting waveforms, and separately allocate resources to the plurality of radar transmitting waveforms, where the resource allocation includes one or more of frequency resource allocation, coding resource allocation, time resource allocation, and space resource allocation; and configure a weight for each of the plurality of radar transmitting waveforms, form a plurality of radar transmitting beams in different directions by using the first antenna array, and transmit the plurality of radar transmitting beams in the different directions to the target object, where the plurality of radar transmitting beams are different from each other in at least one of a frequency resource, a coding resource, a time resource, and a space resource.

In a possible implementation, the radar transmitting waveform is any one of a frequency-modulated continuous wave FMCW, a phase-modulated continuous wave PMCW, and an orthogonal frequency division multiplexing OFDM modulated wave.

In a possible implementation, the space resource allocation includes transmitting array allocation; and the radar transmitting unit is specifically configured to: by using the transmitting module, select a $j^{th}$ first antenna subarray in the first antenna array by using a subarray selection switch in a $j^{th}$ transmitting circuit, and transmit a $j^{th}$ radar transmitting beam in the plurality of radar transmitting beams by using the $j^{th}$ first antenna subarray, where the $j^{th}$ first antenna subarray includes one or more first antenna elements, and j is an integer greater than or equal to 1.

In a possible implementation, the radar receiving unit is specifically configured to: by using the receiving module, in the radar mode, receive, by using the second antenna array, radar echoes that correspond to the plurality of radar transmitting beams and that are reflected by the target object, and separate, based on resource allocation corresponding to each of the plurality of radar transmitting beams, the radar echoes corresponding to the plurality of radar transmitting beams, to obtain a plurality of radar receiving beams in different directions; and obtain a plurality of range-Doppler maps corresponding to the different directions based on the plurality of radar receiving beams in the different directions.

In a possible implementation, the device further includes an artificial intelligence AI processing unit. The radar receiving unit is further configured to send the plurality of range-Doppler maps to the AI processing unit. The AI processing unit is configured to: receive the plurality of range-Doppler maps, and obtain image pixel segmentation information of the target object based on the plurality of range-Doppler maps.

According to a third aspect, an embodiment of this application provides an electronic device. The electronic device may include a processor and a memory. The memory is configured to store program code, and the processor is configured to invoke the program code to implement a function of the electronic device in the first aspect.

According to a fourth aspect, an embodiment of this application provides an antenna array. The antenna array includes the first antenna array and the second antenna array of the electronic device in the first aspect. The antenna array may further include a processor. The processor is configured to support the antenna array in implementing a function of the electronic device provided in the first aspect. The antenna array may further include a memory. The memory is configured to be coupled to the processor, and the memory stores program instructions and data that are necessary for the antenna array. The antenna array may further include a communication interface, configured for communication between the antenna array and another device or a communication network.

According to a fifth aspect, an embodiment of this application provides an integrated radar communication device. The integrated radar communication device includes a processor, and the processor is configured to support the integrated radar communication device in implementing a function of the electronic device provided in the first aspect. The integrated radar communication device may further include a memory. The memory is configured to be coupled to the processor, and the memory stores program instructions and data that are necessary for the integrated radar communication device. The integrated radar communication device may further include a communication interface, configured for communication between a network device and another device or a communication network.

According to a sixth aspect, an embodiment of this application provides a terminal, configured to implement a function of the electronic device in the first aspect.

According to a seventh aspect, an embodiment of this application provides a computer-readable storage medium. The computer-readable storage medium stores a computer program, and when the computer program is executed by a processor, a function of the electronic device in the first aspect is implemented.

According to an eighth aspect, an embodiment of this application provides a computer program. The computer program includes instructions, and when the instructions are executed by a computer, the computer is enabled to implement a function of the electronic device in the first aspect.

## BRIEF DESCRIPTION OF DRAWINGS

To describe technical solutions in embodiments of this application more clearly, the following describes the accompanying drawings for describing embodiments of this application or the background.

FIG. 1 is a schematic diagram of an antenna layout of integrated radar communication according to an embodiment of this application;

FIG. 2 is a schematic diagram of another antenna layout of integrated radar communication according to an embodiment of this application;

FIG. 3 is a schematic diagram of still another antenna layout of integrated radar communication according to an embodiment of this application;

FIG. 4 is a schematic diagram of an architecture of an integrated radar communication system according to an embodiment of this application;

FIG. 5 is a functional block diagram of an intelligent vehicle according to an embodiment of this application;

FIG. 6 is a schematic diagram of an application scenario according to an embodiment of this application;

FIG. 7 is a schematic diagram of a structure of an electronic device according to an embodiment of this application;

FIG. 8 is a schematic working diagram of a communication mode according to an embodiment of this application;

FIG. 9 is a schematic working diagram of a radar mode according to an embodiment of this application;

FIG. 10a to FIG. 10f are a group of schematic diagrams of antenna layouts according to an embodiment of this application;

FIG. 11 is a schematic diagram of a structure of an antenna element according to an embodiment of this application;

FIG. 12 is a schematic diagram of antenna allocation in both a communication mode and a radar mode according to an embodiment of this application;

FIG. 13 is a schematic diagram of a resource allocation procedure according to an embodiment of this application;

FIG. 14 is a schematic diagram of transmitting array allocation according to an embodiment of this application;

FIG. 15a to FIG. 15c are a group of schematic diagrams of allocable resources of different waveforms according to an embodiment of this application;

FIG. 16a is a schematic diagram of structures of a transmitting module and a receiving module according to an embodiment of this application;

FIG. 16b is a schematic diagram of structures of another transmitting module and another receiving module according to an embodiment of this application;

FIG. 17 is a schematic diagram of a structure of a waveform control module according to an embodiment of this application;

FIG. 18 is a schematic diagram of a structure of a waveform compression module according to an embodiment of this application;

FIG. 19 is a schematic diagram of a process of calculating a range-Doppler map according to an embodiment of this application;

FIG. 20 is a schematic diagram of a process of processing a range-Doppler map by using AI according to an embodiment of this application;

FIG. 21 is a schematic diagram of a visible range of an antenna array according to an embodiment of this application;

FIG. 22a is a schematic diagram of single-beam scanning according to an embodiment of this application;

FIG. 22b is a schematic diagram of multi-beam scanning according to an embodiment of this application;

FIG. 23a to FIG. 23c are a group of schematic diagrams of beam splitting according to an embodiment of this application; and

FIG. 24 is a schematic diagram of a structure of an electronic device according to an embodiment of this application.

DESCRIPTION OF EMBODIMENTS

The following describes embodiments of this application with reference to the accompanying drawings in embodiments of this application.

In the specification, claims, and accompanying drawings of this application, the terms "first", "second", "third", "fourth", "1st", "2nd", "3rd", "4th", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

An "embodiment" mentioned in this specification means that a particular feature, structure, or characteristic described with reference to this embodiment may be included in at least one embodiment of the present invention. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside in a process and/or an execution thread, and a component may be located on one computer and/or distributed between two or more computers. In addition, these components may be executed from various computer-readable media that store various data structures. For example, the components may communicate by using a local and/or remote process based on a signal having one or more data packets (for example, data from two components interacting with another component in a local system, a distributed system, and/or across a network such as internet interacting with another system by using the signal).

The following first describes some terms in this application to help a person skilled in the art have a better understanding.

(1) Millimeter-wave radar is a radar that operates in a millimeter-wave (millimeter wave) band for detection. A millimeter wave usually has a wavelength close to a millimeter level, including but not limited to 1 mm to 10 mm. The millimeter-wave radar has advantages of low costs, a velocity measurement capability, all-weather operation, and high reliability. A high-resolution millimeter-wave radar can produce a high-density spatial point cloud, and is also called a millimeter-wave imaging radar.

When the millimeter-wave radar is used as a vehicle-mounted sensor, system performance of the millimeter-wave radar is improved with development of an in-vehicle assisted and autonomous driving system. Especially, continuously increasing spatial resolution of the millimeter-wave radar also poses a higher requirement for increasing a quantity of transmitting and receiving channels of the millimeter-wave radar. A multiple-input multiple-output (multiple-input multiple-output, MIMO) technology allows a millimeter-wave radar system to accommodate more transmitting and receiving channels. A conventional vehicle-mounted millimeter-wave radar obtains a narrow beam by transmitting a wide beam and receiving digital beamforming (digital beamforming, DBF), to improve angle measurement accuracy. The MIMO technology increases a processing quantity of received signals.

Further, with introduction of an artificial intelligence (artificial intelligence, AI) technology in the millimeter-wave radar, the AI technology poses a new requirement on a signal processing and output result of the conventional millimeter-wave radar. For example, the AI technology is more suitable for processing pixelized input data. A range-Doppler map range-Doppler map (range-doppler map, RDmap) obtained by performing two-dimensional (2 dimensions, 2D) fast Fourier transform (fast fourier transform, FFT) on data of the millimeter-wave imaging radar, and a spatial angle spectrum obtained through 3-dimensional (3 dimensions, 3D) /4D FFT are suitable to be used as an input of an AI processing module. In some possible embodiments of this application, a super-resolution angle measurement part of the radar that is added based on FFT can be naturally integrated into the AI processing module, in other words, super-resolution angle measurement can be implemented with assistance of AI processing. This reduces workload of a radar receiving end.

(2) Beamforming (beamforming) is a combination of an antenna technology and a digital signal processing technology, and is intended for directional signal transmission and reception. In some possible embodiments of this application, on a premise of integrated radar communication, a plurality of radar beams in different directions may be simultaneously transmitted through beamforming, so that the radar performs multi-beam scanning on a surrounding environment. This further improves radar detection efficiency, velocity resolution, and the like.

(3) Radar communication integration, as the name implies, is a technology that combines radar and communication and is intended to integrate radar and communication systems on one platform in a specific scientific manner.

In radio development history, radar and communication are developed and studied as two independent systems. The radar is responsible for remote target detection, and the communication is responsible for information data transmission. However, as described above, people expect to transmit information when performing target detection by using the radar. In addition, with pursuit of a miniaturized, integrated, and multi-functional product in today's society, people expect to implement diversified functions on one simple platform. Therefore, the radar communication integration gradually becomes a trend of future development, and is more popular in daily life.

To facilitate understanding of embodiments of this application, technical problems to be specifically resolved in this application is further analyzed and proposed. The communication radar integration technology includes the following plurality of technical solutions. The following exemplifies the following three common solutions.

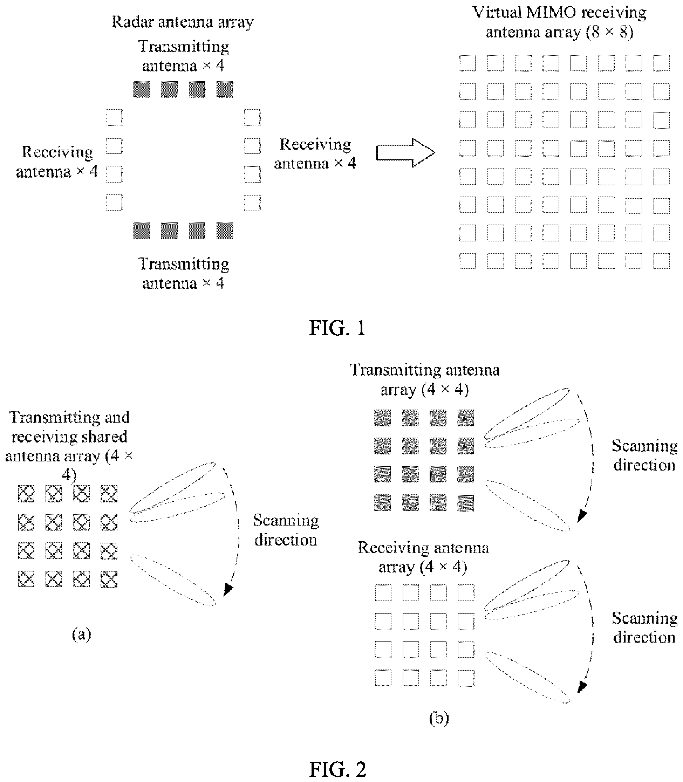

Solution 1: Some antennas of radar antennas may be multiplexed for communication. FIG. 1 is a schematic diagram of an antenna layout of integrated radar communication according to an embodiment of this application. As shown in FIG. 1, a radar antenna array is a MIMO antenna array, and transmitting and receiving radio frequency channels do not share an antenna. The antenna array is specifically divided into a transmitting antenna array and a receiving antenna array. As shown in FIG. 1, the transmitting antenna array may include a total of eight transmitting antennas arranged up and down, and the receiving antenna array may include a total of eight receiving antennas arranged left and right. As shown in FIG. 1, neither the transmitting antenna array nor the receiving antenna array is densely arranged. Optionally, at least one of the transmitting antenna array and the receiving antenna array may be not densely arranged. Transmitting beam and receiving beam are usually wide beams. Further, as shown in FIG. 1, a radar receiving end may combine the receiving antennas into a densely arranged virtual MIMO antenna array, and measure a target spatial position through digital beamforming. Some antennas in the antenna array may be multiplexed for low-frequency communication.

A vehicle-mounted radar in the solution 1 usually operates in a high frequency band, especially in a millimeter-wave frequency band. Millimeter-wave communication and a millimeter-wave radar have different requirements on an antenna array. In millimeter-wave communication, transmit power and a receive gain need to be increased by using a phased array in which transmitting and receiving antennas are densely arranged. Clearly, the non-densely arranged antenna array shown in FIG. 1 requires a large quantity of antennas for high-frequency communication, imposing an extremely great challenge to radar communication integration. In addition, it should be noted that, in an actual production application, the virtual MIMO receiving antenna array shown in FIG. 1 has a relatively large scale, usually having a scale of hundreds of rows and hundreds of columns. If one antenna (namely, one radio frequency channel) is connected to one digital signal processing channel, digital signal processing complexity of the radar receiving end is usually increased.

Solution 2: FIG. 2 is a schematic diagram of another antenna layout of integrated radar communication according to an embodiment of this application. A radar antenna and a communication antenna may share a same antenna array. Optionally, as shown in (a) in FIG. 2, the antenna array is a dense phased array of four rows × four columns for transmission and reception, and transmitting and receiving radio frequency channels share one antenna array. Optionally, as shown in (b) in FIG. 2, the antenna array may alternatively be divided into two separate arrays: a transmitting antenna array of four rows × four columns and a receiving antenna array of four rows × four columns. In antenna layout manners shown in (a) and (b) in FIG. 2, a radar mode and a communication mode may be switched in a time-division manner, so that radar communication integration is implemented based on the same antenna array.

A radar antenna shown in FIG. 2 usually operates in a single-beam time division scanning manner, resulting in a low velocity and low efficiency of radar scanning. In addition, when transmitting and receiving antenna arrays are two separate arrays, occupied areas are large. This is unfavorable to integration and miniaturization of a device.

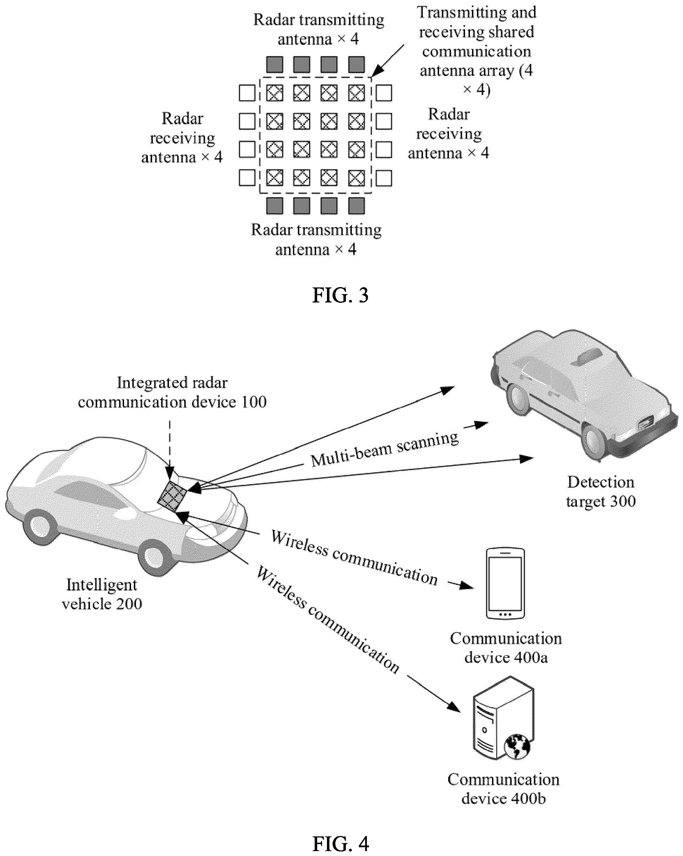

Solution 3: FIG. 3 is a schematic diagram of still another antenna layout of integrated radar communication according to an embodiment of this application. As shown in FIG. 3, a radar antenna array and a communication antenna array are two separate antenna arrays that operate independently, meeting operating requirements of radar and communication. The radar antenna array includes a total of eight radar transmitting antennas arranged up and down, and a total of eight radar receiving antennas arranged left and right. The communication antenna array is a shared transmitting and receiving array of four rows × four columns. Optionally, refer to the antenna layout in FIG. 1. Similarly, a radar receiving end may integrate the eight radar receiving antennas shown in FIG. 3 into a densely arranged virtual MIMO receiving antenna array, and measure a target spatial position through digital beamforming.

The radar antenna array and the communication antenna array in FIG. 3 occupy relatively large areas. This causes an increase in production and manufacturing costs, and is unfavorable to integration and miniaturization of a device. In addition, a radar radio frequency channel and a communication radio frequency channel are not multiplexed (or a radar antenna and a communication antenna are not multiplexed). As a result, a quantity of radio frequency channels is relatively large. In addition, refer to the antenna layout shown in FIG. 1. Similarly, the radar virtual MIMO receiving antenna array has a relatively large scale. If one antenna (namely, one radio frequency channel) is connected to one digital signal processing channel, processing complexity of a radar receiving signal is usually higher.

In conclusion, a radar communication integration technology described in FIG. 1 to FIG. 3 still has relatively large significant room for improvement. For example, there are problems such as a low multiplexing rate of the radar antenna and the communication antenna, a low radar scanning velocity, and low radar detection efficiency, which cannot meet an actual application requirement.

Therefore, this application further provides the following plurality of other embodiments, to greatly improve a multiplexing rate of a radar antenna and a communication antenna by using an appropriate antenna layout on a premise that radar communication integration is met. This reduces an area occupied by an antenna array, further reduces production costs, and meets development of device integration, miniaturization, and lightweight. In addition, the radar mode may be a multi-beam scanning operating manner. This improves radar scanning efficiency and velocity resolution, and meets an actual application requirement of a user.

Similarly, this application further provides a terminal, configured to implement the foregoing functions. Specifically, the terminal may be a mobile phone (mobile phone), a tablet computer (tablet computer), a laptop computer (laptop computer), a wearable device (for example, a smartwatch, a smart band, a smart helmet, or smart glasses), other devices that have a wireless access capability, for example, an intelligent vehicle and various Internet of Things (internet of thing, IOT) devices including various smart home devices (such as a smart meter and a smart appliance) and smart city devices (such as a security protection or monitoring device and an intelligent road transportation facility), and the like. For ease of description, this application uses an example in which the terminal is the intelligent vehicle, to describe in detail the technical solutions in the following other embodiments of this application.

FIG. 4 is a schematic diagram of an architecture of an integrated radar communication system according to an embodiment of this application. The technical solutions in the other embodiments of this application may be specifically implemented in the system architecture shown in FIG. 4 or a similar system architecture. As shown in FIG. 4, the system architecture may include an intelligent vehicle 200, a detection target 300 (a compact sedan is used as an example in FIG. 4), and a plurality of communication devices, which may specifically include communication devices 400a and 400b. An integrated radar communication device 100 may be installed in the intelligent vehicle 200. Optionally, the integrated radar communication device 100 may be a vehicle-mounted radar that has radar detection and communication functions and includes a corresponding antenna array.

In a driving process of the intelligent vehicle 200, the integrated radar communication device 100 in the intelligent vehicle 200 may simultaneously transmit, by using the antenna array based on beamforming, a plurality of radar beams in different directions (that is, directionally transmit, through beamforming, a plurality of radar waveforms or radar signals in different directions) to a surrounding environment (for example, the detection target 300 shown in FIG. 4), to implement multi-beam scanning on the surrounding environment. Correspondingly, the integrated radar communication device 100 may receive, by using the antenna array, a plurality of radar echoes reflected by the detection target 300, and form, based on beamforming, a plurality of corresponding radar beams in different directions. In this case, the integrated radar communication device 100 directionally receives the plurality of radar echoes, and further obtains information such as a range, an orientation, and a velocity of the detection target 300. When the integrated radar communication device 100 transmits the plurality of radar beams in the different directions, a manner like frequency division, code division, time division, and antenna subarray allocation may be used, so that the plurality of radar beams are different in at least one of resources such as a frequency, code, transmission time, and a transmitting antenna (for example, a frequency of one radar beam in two radar beams is a frequency band 1, and a frequency of the other radar beam is a frequency band 2). This reduces interference between the radar beams, so that radar echoes corresponding to different radar beams can be separated subsequently. Therefore, in this embodiment of this application, radar detection efficiency is improved through multi-beam scanning, reliability and accuracy of radar detection may be further ensured based on resource allocation and echo separation, and final radar imaging quality, and the like may be ensured.

In addition, in the driving process of the intelligent vehicle 200, the integrated radar communication device 100 may further directionally send, by using the antenna array based on beamforming, communication signals to the communication devices 400a and 400b, and directionally receive communication signals sent by the communication devices 400a and 400b, and the like. The communication signal sent by the integrated radar communication device 100 may carry information, for example, the range, the orientation, and the velocity of the detection target 300 that is collected by the integrated radar communication device 100, and may further include data (for example, may include data such as an image, a point cloud, temperature, and humidity) of the surrounding environment in the driving process that is collected by another sensor (for example, a camera, a lidar, a temperature sensor, and a humidity sensor) in the intelligent vehicle 200, and the like. Optionally, the communication devices 400a and 400b may subsequently generate corresponding radar images, and the like based on the obtained information. This is not specifically limited in this embodiment of this application.

In conclusion, a part or all of the antenna array may be multiplexed for radar transmission and reception, and communication transmission and reception. For example, the antenna array may include a communication transmitting and receiving antenna array, a radar transmitting antenna array, and a radar receiving antenna array. Multiplexing may be performed between the communication transmitting and receiving antenna array and the radar transmitting antenna array, that is, both the communication transmitting and receiving antenna array and the radar transmitting antenna array may be a same antenna arrays, or a part of the communication transmitting and receiving antenna array may be multiplexed as the radar transmitting antenna. Further, a part or all of the communication transmitting and receiving antenna array may alternatively be used for radar reception, and the like. In this way, this embodiment of this application can greatly improve a multiplexing rate of radar and communication antennas in radar communication integration, and reduce a quantity of antennas and an area occupied by the antenna on a premise of implementing communication integration. In addition, radar detection efficiency is improved through multi-beam scanning, implementing highly efficient radar communication integration.

As described above, the integrated radar communication device 100 may be the vehicle-mounted radar that has the radar detection and communication functions, and an operating frequency band of the vehicle-mounted radar may include a millimeter-wave frequency band, for example, a vehicle-mounted millimeter-wave radar. The detection target 300 may be a vehicle, a pedestrian, a traffic signal, a building, or the like in a road scenario. The communication devices 400a and 400b may be intelligent wearable devices, smartphones, tablet computers, notebook computers, desktop computers, and servers that have the foregoing communication function, or may be a vehicle-mounted communication device in another vehicle, or may be a server cluster including a plurality of servers or a cloud computing service center, for example, an internet of vehicles cloud service center, or may be a base station, or the like. This is not specifically limited in this embodiment of this application.

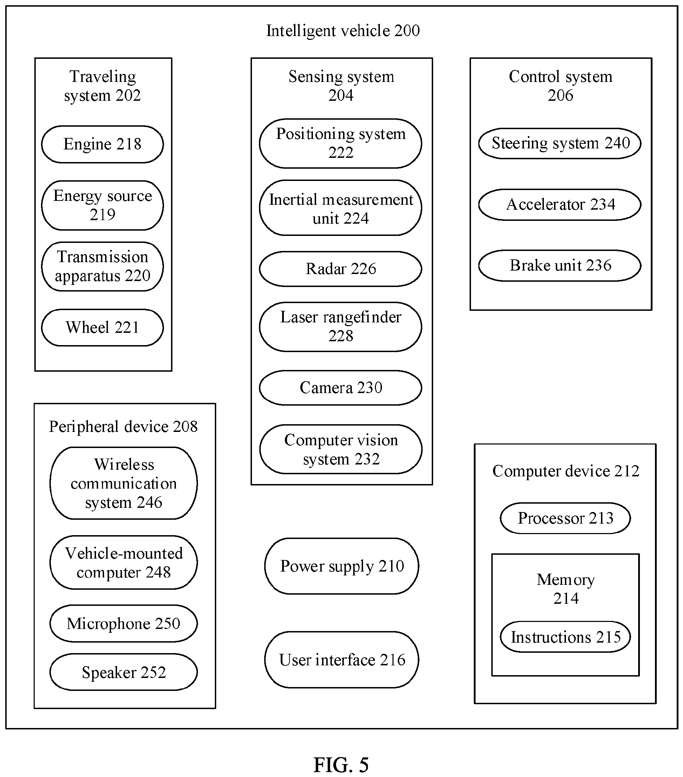

FIG. 5 is a functional block diagram of an intelligent vehicle according to an embodiment of this application. Technical solutions in the following other embodiments of this application may be applied to the intelligent vehicle 200 shown in FIG. 5. In an embodiment, the intelligent vehicle 200 may be configured to be in a fully or partially autonomous driving mode. When the intelligent vehicle 200 is in the autonomous driving mode, the intelligent vehicle 200 may be configured to operate without interacting with a person.

The intelligent vehicle 200 may include various subsystems, for example, a traveling system 202, a sensing system 204, a control system 206, one or more peripheral devices 208, a power supply 210, a computer system 212, and a user interface 216. Optionally, the intelligent vehicle 200 may include more or fewer subsystems, and each subsystem may include a plurality of elements. In addition, all the subsystems and elements of the intelligent vehicle 200 may be interconnected in a wired or wireless manner.

The traveling system 202 may include a component that provides power for the intelligent vehicle 200 to move. In an embodiment, the traveling system 202 may include an engine 218, an energy source 219, a transmission apparatus 220, and a wheel 221. The engine 218 may be an internal combustion engine, a motor, an air compression engine, or another type of engine combination, for example, a hybrid engine including a gasoline engine and a motor, or a hybrid engine including an internal combustion engine and an air compression engine. The engine 218 may convert the energy source 219 into mechanical energy.

The energy source 219 includes, for example, gasoline, diesel, other oil-based fuels, propane, other compressed gas-based fuels, anhydrous alcohol, solar panels, batteries, and other power sources. The energy source 219 may also provide energy for another system of the intelligent vehicle 200.

The transmission apparatus 220 may transmit mechanical power from the engine 218 to the wheel 221. The transmission apparatus 220 may include a gearbox, a differential, and a drive shaft. In an embodiment, the transmission apparatus 220 may further include another component, for example, a clutch. The drive shaft may include one or more shafts that may be coupled to one or more wheels 221.

The sensing system 204 may include several sensors. The several sensors may be configured to collect surrounding environment information of the intelligent vehicle 200 (for example, may include temperature, humidity, and terrain, a road, a motor vehicle, a non-motor vehicle, a pedestrian, a roadblock, a traffic sign, a traffic signal light, an animal, a building, and a plant that are around the intelligent vehicle 200). As shown in FIG. 5, the sensing system 204 may include a positioning system 222 (the positioning system may be a global positioning system (global positioning system, GPS), or may be a BeiDou system or another positioning system), an inertia measurement unit (inertial measurement unit, IMU) 224, a radar 226, a laser rangefinder 228, a camera 230, a computer vision system 232, and the like.

The positioning system 222 may be configured to estimate a geographical position of the intelligent vehicle 200. The IMU 224 is configured to sense position and direction changes of the intelligent vehicle 200 based on inertial acceleration. In an embodiment, the IMU 224 may be a combination of an accelerometer and a gyroscope.

The radar 226 may sense an object in the ambient environment of the intelligent vehicle 200 by using a radio signal. In some possible embodiments, the radar 226 may be further configured to sense a speed and/or a moving direction of a vehicle around the intelligent vehicle 200, and the like. The radar 226 may be a lidar, or may be a millimeter-wave radar, or the like, and may be configured to collect point cloud data of a surrounding environment, or the like.

Optionally, in some possible embodiments, the radar 226 may be a radar integrated with communication, for example, may be the integrated radar communication device 100 in FIG. 4, and may include an antenna array used for radar detection and communication. When the radar 226 is in a radar mode, the antenna array may be used to simultaneously transmit, based on beamforming, a plurality of radar beams in different directions to a surrounding environment, to implement multi-beam scanning on the surrounding environment, and finally obtain information such as a range, an orientation, and a velocity of each target in a driving environment. Specifically, the radar 226 may obtain, based on a radar echo reflected by each target, a plurality of range-Doppler maps (or referred to as range-Doppler spectra) in corresponding to the different directions through fast-time-range spectrum calculation, slow-time fast Fourier transform (fast fourier transform, FFT), and the like, and the like. Correspondingly, when the radar 226 is in a communication mode, the antenna array may be used to perform transmission and reception of a communication signal between the radar and one or more communication devices. For example, data of a surrounding environment collected by the radar 226 or another sensor may be uploaded to a server side. Details are not described herein. In this way, the radar 226 in the intelligent vehicle 200 in this application can improve radar detection efficiency through multi-beam scanning on a premise of implementing radar communication integration, and ensure driving safety and comfort.

The laser rangefinder 228 may sense, by using a laser, an object in an environment in which the intelligent vehicle 200 is located. In some possible embodiments, the laser rangefinder 228 may include one or more laser sources, one or more laser scanners, one or more detectors, and another system component.

The camera 230 may be configured to capture a plurality of images of the ambient environment of the intelligent vehicle 200. In some possible embodiments, the image collected by the camera may further be fused, during AI processing, with the plurality of range-Doppler maps in the different directions obtained by the radar 226, to obtain corresponding image pixel segmentation information. Details are not described herein again. In some possible embodiments, the camera 230 may be a static camera or a video camera.

The computer vision system 232 may operate to process and analyze an image captured by the camera 230, to recognize an object and/or a feature in the ambient environment of the intelligent vehicle 200. The objects and/or feature may include terrain, a motor vehicle, a non-motor vehicle, a pedestrian, a building, a traffic signal, a road boundary, an obstacle, and the like. The computer vision system 232 may use an object recognition algorithm, a structure from motion (structure from motion, SFM) algorithm, video tracking, and another computer vision technology.

The control system 206 controls operations of the intelligent vehicle 200 and the components of the intelligent vehicle 200. The control system 206 may include various elements, including an accelerator 234, a brake unit 236, and a steering system 240.

The accelerator 234 is configured to control an operating speed of the engine 218, to control a speed of the intelligent vehicle 200.

The brake unit 236 is configured to control the intelligent vehicle 200 to decelerate. The brake unit 236 may use friction to slow the wheel 221. In another embodiment, the brake unit 236 may convert kinetic energy of the wheel 221 into a current. The brake unit 236 may alternatively slow a rotational speed of the wheel 221 in another manner, to control the speed of the intelligent vehicle 200.

The steering system 240 may be operated to adjust a moving direction of the intelligent vehicle 200.

Certainly, in an instance, the control system 206 may additionally or alternatively include a component other than those shown and described. Alternatively, the control system 206 may delete some of the components shown above.

The intelligent vehicle 200 interacts with an external sensor, another vehicle, another computer system, or a user by using the peripheral device 208. The peripheral device 208 may include a wireless communication system 246, a vehicle-mounted computer 248, a microphone 250, and/or a speaker 252. In some embodiments, data collected by one or more sensors in the sensing system 204 may also be uploaded to the server side by using the wireless communication system 246. This is not specifically limited in this embodiment of this application.

In some embodiments, the peripheral device 208 provides a means for a user of the intelligent vehicle 200 to interact with the user interface 216. For example, the vehicle-mounted computer 248 may provide information to the user of the intelligent vehicle 200. The user interface 216 may further operate the vehicle-mounted computer 248 to receive a user input. The vehicle-mounted computer 248 may perform an operation by using a touchscreen. In another case, the peripheral device 208 may provide a means for the intelligent vehicle 200 to communicate with another device located in the vehicle. For example, the microphone 250 may receive audio (for example, a voice command or another audio input) from the user of the intelligent vehicle 200. Similarly, the speaker 252 may output audio to the user of the intelligent vehicle 200.

The wireless communication system 246 may wirelessly communicate with one or more devices directly or by using a communication network. For example, the wireless communication system 246 may use a third generation mobile communication network (3rd generation mobile network, 3G) cellular communication, for example, code division multiple access (code division multiple access, CDMA), a global system for mobile communication (global system for mobile communication, GSM)/general packet radio service (general packet radio service, GPRS), or a fourth generation mobile communication network (4th generation mobile network, 4G) cellular communication, for example, long term evolution (long term evolution, LTE), or the third generation mobile communication network (5th generation mobile network, 5G) cellular communication. The wireless communication system 246 may further communicate with a wireless local area network (wireless local area network, WLAN) through a wireless fidelity (wireless-fidelity, WI-FI) technology. In some embodiments, the wireless communication system 246 may directly communicate with a device by using an infrared link, Bluetooth, or the like. Other wireless protocols, for example, various vehicle communication systems such as the wireless communication system 246, may include one or more dedicated short-range communication (dedicated short range communication, DSRC) devices, and the devices may include public and/or private data communication between vehicles and/or roadside stations. In some possible embodiments, the radar 226, as the radar integrated with communication, may integrate some or all functions of the wireless communication system 246, implement radar detection and communicate with another device to transmit data.

The power supply 210 may supply power to various components of the intelligent vehicle 200. In an embodiment, the power supply 210 may be a rechargeable lithium-ion or lead-acid battery. One or more battery packs of such a battery may be configured as a power supply to supply power to the various components of the intelligent vehicle 200. In some embodiments, the power supply 210 and the energy source 219 may be implemented together, as in some battery electric vehicles.

Some or all functions of the intelligent vehicle 200 are controlled by the computer system 212. The computer system 212 may include at least one processor 213, and the processor 213 executes instructions 215 stored in a non-transient computer-readable medium such as the memory 214. The computer system 212 may alternatively be a plurality of computing devices that control an individual component or subsystem of the intelligent vehicle 200 in a distributed manner.

The processor 213 may be any conventional processor, such as a commercially available central processing unit (central processing unit, CPU). Optionally, the processor may be a dedicated device like an application-specific integrated circuit (application-specific integrated circuit, ASIC) or another hardware-based processor. Although FIG. 5 functionally illustrates the processor, the memory, and another element of the computer system 212 in a same block, a person of ordinary skill in the art should understand that the processor or the memory may actually include a plurality of processors or memories that are not stored in a same physical housing. For example, the memory may be a hard disk drive or another storage medium located in a housing different from that of the computer system 212. Therefore, a reference to the processor or the memory is understood as including a reference to a set of processors or memories that may or may not operate in parallel. Different from using a single processor to perform the steps described herein, for example, some components in the sensing system 204 each may include respective processors. The processor performs only computation related to a component-specific function. For example, the radar 226 may include one or more processors, configured to process computations related to functions such as radar detection and communication.

In various aspects described herein, the processor 213 may be located far away from the vehicle and wirelessly communicate with the vehicle. In other aspects, some of the processes described herein are performed by a processor disposed in the vehicle, and others are performed by a remote processor.

In some embodiments, the memory 214 may include the instructions 215 (for example, program logic), and the instructions 215 may be executed by the processor 213, to perform various functions of the intelligent vehicle 200, including the functions described above. The memory 214 may also include an additional instruction, including an instruction for sending data to, receiving data from, interacting with, and/or controlling one or more of the traveling system 202, the sensing system 204, the control system 206, and the peripheral device 208.

In addition to the instructions 215, the memory 214 may further store data, for example, a large amount of sensor data collected by the sensing system 204 in a driving process, for example, may include image data captured by the camera 230 in the sensing system 204, and the range-Doppler maps in the plurality of directions or the point cloud data obtained by the radar 226. In some embodiments, the memory 214 may further store data, for example, a road map, route information, a current position, direction, speed, and other vehicle data of the intelligent vehicle 200, and other information. The information may be used by the wireless communication system 246, the radar 226, the computer system 212, or the like in the intelligent vehicle 200 during driving of the intelligent vehicle 200.

The user interface 216 is configured to provide information for or receive information from the user of the intelligent vehicle 200. Optionally, the user interface 216 may include one or more input/output devices within a set of peripheral devices 208, such as the wireless communication system 246, the vehicle-mounted computer 248, the microphone 250, and the speaker 252.

Optionally, one or more of the foregoing components may be installed separately from or associated with the intelligent vehicle 200. For example, the memory 214 may be partially or completely separate from the intelligent vehicle 200. The foregoing components may be communicatively coupled together in a wired and/or wireless manner.

In conclusion, the intelligent vehicle 200 may be a sedan, a truck, a motorcycle, a bus, a boat, an uncrewed aerial vehicle, an airplane, a helicopter, a lawn mower, a recreational vehicle, a playground vehicle, a construction device, a trolley, a golf cart, a train, a handcart, or the like. This is not specifically limited in this embodiment of this application.

It may be understood that the functional block diagram of the intelligent vehicle in FIG. 5 is merely an example implementation in this embodiment of this application. The intelligent vehicle in this embodiment of this application includes but is not limited to the foregoing structure.

For ease of understanding of this application, the following enumerates an example application scenario to which the integrated radar communication device in this embodiment of this application is applicable. The following in-vehicle scenario may be included.

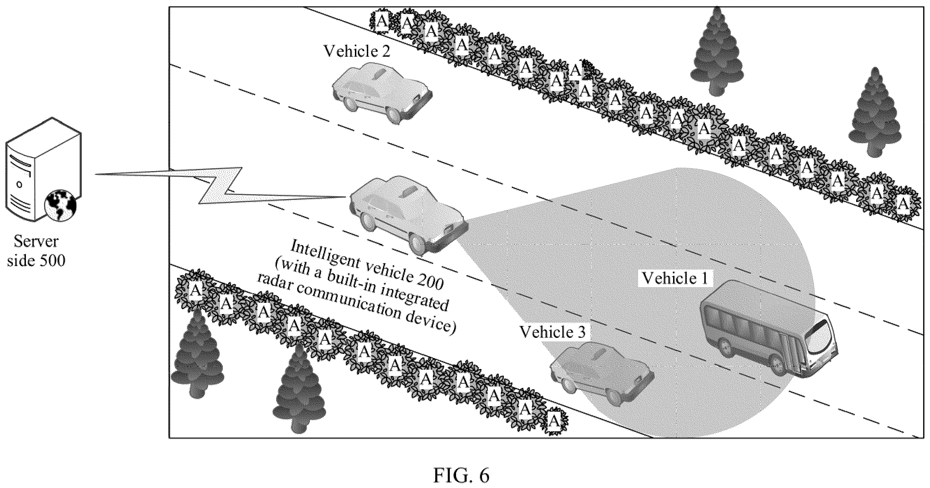

FIG. 6 is a schematic diagram of an application scenario according to an embodiment of this application. As shown in FIG. 6, the application scenario may include a server side 500 and an intelligent vehicle 200 (a compact sedan is used as an example in FIG. 6) that travels on an actual road (for example, a common multi-lane road shown in FIG. 6). Optionally, as shown in FIG. 6, the application scenario may further include a plurality of other vehicles, for example, a vehicle 1 (a bus is used as an example in FIG. 6), a vehicle 2 (a compact sedan is used as an example in FIG. 6) and a vehicle 3 (a compact sedan is used as an example in FIG. 6). The intelligent vehicle 200 may include the components described in FIG. 5, and a built-in integrated radar communication device (for example, the integrated radar communication device 100 described in FIG. 4). In a driving process of the intelligent vehicle 200, the intelligent vehicle 200 may be in an autonomous driving mode or an assisted driving mode, and may transmit a plurality of radar beams in different directions to a surrounding environment by using the integrated radar communication device in the intelligent vehicle 200, and receive radar echoes reflected by all targets (for example, the targets may include the vehicle 1 and the vehicle 3 shown in FIG. 6) in the environment. In this way, information such as an orientation, a range, and a velocity of each target in the environment can be efficiently obtained, that is, a surrounding traffic environment is sensed. In addition, the intelligent vehicle 200 may further establish a wireless communication connection to the server side 500 by using the integrated radar communication device, to upload the information obtained by the integrated radar communication device to the server side 500. Even, the integrated radar communication device may further obtain information collected by a plurality of other sensors (such as a camera, a lidar, and a GPS) in the intelligent vehicle 200, and upload the information to the server side 500 together. The server side 500 may subsequently store information uploaded by the integrated radar communication device, further integrate the information into corresponding traffic information, and may further send the traffic information to another intelligent vehicle that establishes a communication connection to the server side 500 in real time, to ensure sharing of real-time traffic information (or real-time road condition) in an entire traffic network. This effectively improves driving safety and comfort, and prevents a traffic accident. The server side 500 may be, for example, a cloud server of the entire traffic network. Optionally, the server side 500 may further construct a high-definition map based on information collected by integrated radar communication devices in a plurality of intelligent vehicles and various sensors. This is not specifically limited in this embodiment of this application.

As mentioned above, with continuous development and popularity of an internet of vehicles and an intelligent transportation system, the vehicle becomes an important carrier of various electronic devices. People hope that the vehicle can complete a basic driving task, sense the surrounding traffic environment by using a sensor like the camera, the lidar, the millimeter-wave radar, and transmit the information in the traffic network, that is, perform communication. Obviously, the integrated radar communication device provided in this embodiment of this application plays an important role in a vehicle scenario, meeting a development trend of integration, miniaturization, and lightweight of the vehicle-mounted device.

In conclusion, the server side 500 may be a desktop computer, a vehicle-mounted computer, a server, or the like that has the foregoing functions. The server side 500 may be one server, or may be a server cluster including a plurality of servers, or may be a cloud computing service center. This is not specifically limited in this embodiment of this application. The intelligent vehicle 200 may be a compact family sedan, a van, a bus, a taxi, a motorcycle, a yacht, or the like that has the foregoing functions. This is not specifically limited in this embodiment of this application.

It may be understood that, in some possible embodiments, the integrated radar communication device may be further applied to a scenario other than the foregoing in-vehicle scenario. This is not specifically limited in this embodiment of this application.

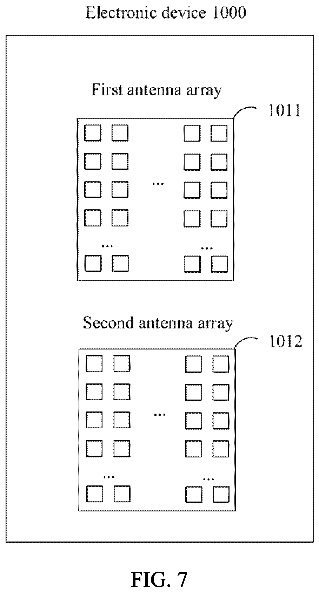

FIG. 7 is a schematic diagram of a structure of an electronic device according to an embodiment of this application. The electronic device 1000 may be an integrated radar communication device, for example, may be the integrated radar communication device 100 described in FIG. 4, and may be specifically a vehicle-mounted millimeter-wave radar having radar detection and communication functions. The electronic device 1000 may include a communication mode and a radar mode. Optionally, the radar mode and the communication mode may be switched in a time-division manner, that is, after radar detection is performed for a time period, communication may be performed for a time period, and this cycle is repeated.

Specifically, as shown in FIG. 7, the electronic device 1000 includes a first antenna array 1011 and a second antenna array 1012.

Optionally, when the electronic device 1000 is in the communication mode, transmission and reception of a communication signal are performed between the electronic device 1000 and a target device (for example, the communication device 400a and the communication device 400b shown in FIG. 4) by using the first antenna array 1011. Further, in the communication mode, the electronic device 1000 may form, by using the first antenna array 1011, one or more communication transmitting beams based on beamforming, to directionally transmit communication signals to one or more target devices, and form, by using the first antenna array 1011, one or more corresponding communication receiving beams based on beamforming, to directionally receive communication signals transmitted by one or more target devices, and the like. Details are not described herein again. It should be understood that, when the electronic device 1000 is in the communication mode, a part or all of the first antenna array 1011 may be actually used to transmit and receive the communication signal. In other words, not all antennas of the first antenna array 1011 may be used to transmit and receive the communication signal each time. This is not specifically limited in this embodiment of this application.

Optionally, when the electronic device 1000 is in a radar mode, the electronic device 1000 may transmit radar transmitting beams to a target object (for example, the vehicle 1 shown in FIG. 6) by using the first antenna array 1011. Optionally, the electronic device may transmit radar transmitting beams by using a part or all of the first antenna array 1011, that is, in the radar mode, the part or all of the first antenna array may be multiplexed for radar transmission. This improves a multiplexing rate of radar and communication antennas in the integrated radar communication device, effectively reduces an area occupied by the antenna, reduces production and manufacturing costs, and meets an application requirement and a development trend of device miniaturization and lightness. Further, when the electronic device 1000 is in the radar mode, the electronic device may further simultaneously transmit a plurality of radar transmitting beams in different directions to the target object, to increase a radar scanning velocity and implement highly efficient radar detection.

Optionally, when the electronic device 1000 is in the radar mode, the electronic device may receive, by using the second antenna array 1012, a radar echo reflected by the target object, to detect the target object, that is, to sense a surrounding environment. The radar echo may be radar echoes corresponding to the plurality of radar transmitting beams in the different directions. Similarly, it should be understood that, when the electronic device 1000 is in the radar mode, the electronic device may actually use a part or all of the first antenna array 1011 to transmit the radar transmitting beams, and use a part or all of the second antenna array 1012 to receive the radar echoes, that is, not all antennas of the first antenna array 1011 may be used to transmit the radar transmitting beams each time, and not all antennas of the second antenna array 1012 may be used to receive the radar echoes. This is not limited in this embodiment of this application.

Optionally, the first antenna array 1011 or the second antenna array 1012 or both may be phased arrays. In addition, as described above, in the communication mode, the first antenna array 1011 is applicable to transmitting and receiving the communication signal. Therefore, the first antenna array may be a densely arranged antenna array (for example, may include antenna elements of 60 rows × 60 columns, or antenna elements of 75 rows × 50 columns, or even more), to meet a requirement of high-frequency communication, especially a requirement of millimeter-wave communication. This is not specifically limited in this embodiment of this application.

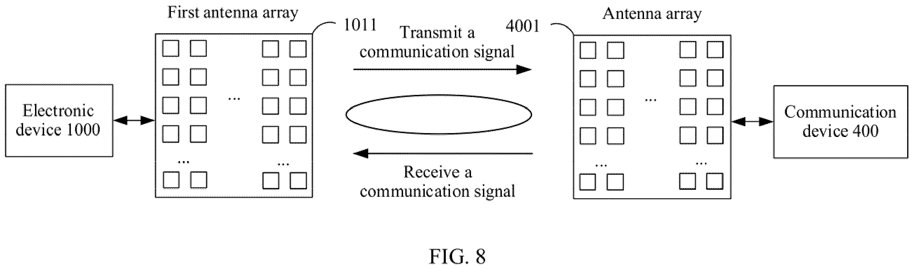

FIG. 8 is a schematic working diagram of a communication mode according to an embodiment of this application. As shown in FIG. 8, in the communication mode, transmission and reception of a communication signal may be performed between the electronic device 1000 and a communication device 400 by using the first antenna array 1011. Specifically, directional transmission and directional reception of the communication signal may be performed between the electronic device and the communication device by using the first antenna array 1011 based on beamforming, to complete transmission of information (or data), and the like. Details are not described herein again. Optionally, as shown in FIG. 8, the communication device 400 may further include an antenna array 4001 used for communication transmission and reception. The communication device 400 may alternatively be the integrated radar communication device provided in an embodiment of this application.

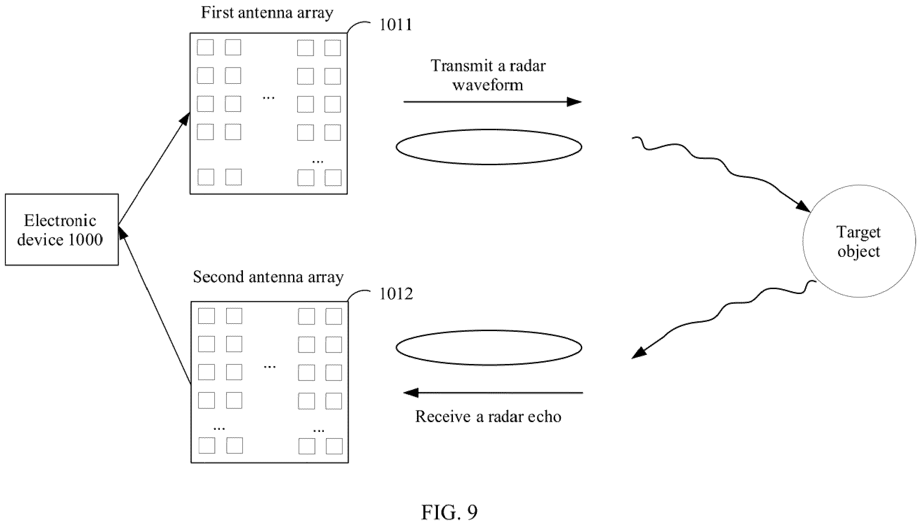

FIG. 9 is a schematic working diagram of a radar mode according to an embodiment of this application. As shown in FIG. 9, in the radar mode, the electronic device 1000 may transmit, by using the first antenna array 1011 based on beamforming, the plurality of radar transmitting beams in the different directions (that is, radar waveforms are directionally transmitted in a plurality of directions) to the target object, to implement multi-beam scanning on the target object. The radar waveform may include one or more of waveforms such as an orthogonal frequency division multiplexing (orthogonal frequency division multiplexing, OFDM) modulated wave, a frequency-modulated continuous wave (frequency modulated continuous wave, FMCW), and a phase-modulated continuous wave (phase modulated continuous wave, PMCW). This is not specifically limited in this embodiment of this application.

Correspondingly, as shown in FIG. 9, the electronic device 1000 may receive, by using the second antenna array 1012, the radar echoes corresponding to the plurality of radar transmitting beams in the different directions that are reflected by the target object, and correspondingly form a plurality of corresponding radar receiving beams in different directions based on waveforming, to directionally receive the plurality of a radar echo reflected by the target object.

Subsequently, a receiving end of the electronic device 1000 may further obtain, based on the plurality of radar receiving beams in the different directions (namely, the plurality of radar echoes directionally received), a plurality of range-Doppler maps in different directions corresponding to the target object, and the like, to obtain information such as a velocity, a range, and an orientation of the target object, that is, to complete velocity measurement, range measurement, and angle measurement. It may be understood that, as described above, in this application, there are the plurality of beams in the different directions at a radar transmitting end. Therefore, when receiving the plurality of corresponding radar echoes that include different direction information, a radar receiving end may quickly and conveniently complete high-resolution angle measurement in a conventional radar based on the plurality of pieces of direction information. This greatly reduces calculation and processing complexity of the radar receiving end, that is, reduces workload and power consumption of the radar receiving end, and prevents device overheating and shutdown, and a potential hazard to driving safety.

In conclusion, the first antenna array may include first antenna elements in M rows × N columns, and the second antenna array may include second antenna elements in K rows × L columns, where M, N, K, and L are integers greater than or equal to 1. Optionally, M × N may be equal to K × L, that is, the first antenna array and the second antenna array may have a same scale.

Optionally, the second antenna array may be located around the first antenna array. A plurality of second antenna elements of the second antenna array may be disposed adjacent to one or more vertices of the first antenna array, or a plurality of second antenna elements may be disposed adjacent to one or more sides of the first antenna array. This can use a dense arrangement feature of the first antenna array used to implement a communication function, and increase an effective aperture of the radar antenna. For example, the second antenna array includes four second antenna subarrays. The four second antenna subarrays may be respectively located around four vertices of the first antenna array, or the four second antenna subarrays are respectively located outside four sides of the first antenna array.

Optionally, the second antenna array may alternatively be a part or all of the first antenna array, that is, the first antenna array may include a plurality of first multiplexed antenna elements, and the plurality of first multiplexed antenna elements may be multiplexed by the second antenna array. The following still uses an example in which the second antenna array includes four second antenna subarrays. The four second antenna subarrays may be four first antenna subarrays in the first antenna array. Optionally, the four first antenna subarrays may be respectively located at four vertices of the first antenna array (that is, antennas at the four vertices of the first antenna array may be multiplexed as the second antenna array used for radar reception); or the four first antenna subarrays may be respectively located on four sides of the first antenna array (that is, antennas on the four sides of the first antenna array may be multiplexed as the second antenna array used for radar reception). In this way, the antenna located at the vertex or on the side of the first antenna array is multiplexed, so that an antenna multiplexing rate can be further improved, a quantity of antennas and an area occupied by the antenna can be reduced, and an effective aperture of a radar antenna can be further increased.

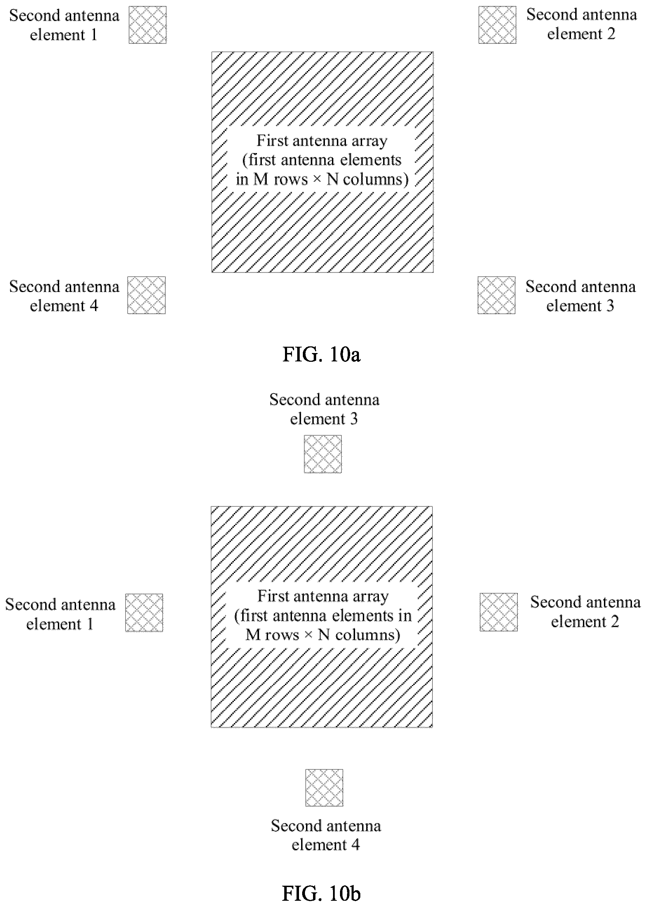

The following using examples to describe in detail a plurality of possible antenna layouts in the electronic device provided in this application. FIG. 10a to FIG. 10f are a group of schematic diagrams of antenna layouts according to an embodiment of this application.

As shown in FIG. 10a, a first antenna array may include first antenna elements in M rows × N columns, and a second antenna array may include second antenna elements in two rows × two columns, and may specifically include a second antenna element 1, a second antenna element 2, a second antenna element 3, and a second antenna element 4 shown in FIG. 10a. Optionally, the second antenna array may be disposed around the first antenna array. For example, as shown in FIG. 10a, the second antenna element 1, the second antenna element 2, the second antenna element 3, and the second antenna element 4 of the second antenna array may be respectively disposed near four vertices of the first antenna array.

For example, the first antenna array may include first antenna elements in three rows × three columns. Then, a first antenna element in a first row and a first column, a first antenna element in the first row and a third column, a first antenna element in a third row and the first column, and a first antenna element in the third row and the third column may be respectively considered as the four vertices of the first antenna array: an upper left vertex, an upper right vertex, a lower left vertex, and a lower right vertex. In this case, the second antenna element 1, the second antenna element 2, the second antenna element 3, and the second antenna element 4 may be respectively disposed adjacent to the four vertices of the first antenna array: the upper left vertex, the upper right vertex, the lower left vertex, and the lower right vertex. For another example, the first antenna array may include first antenna elements in five rows × five columns. Similarly, a first antenna element 1 in a first row and a first column, a first antenna element 2 in the first row and a fifth column, a first antenna element 3 in a fifth row and the first column, and a first antenna element 4 in the fifth row and the fifth column may be respectively considered as the four vertices of the first antenna array.

For example, the second antenna array may include second antenna elements in four rows × four columns. The second antenna elements in four rows × four columns may be further divided into four second antenna subarrays of two rows × two columns. The four second antenna subarrays of two rows × two columns may be respectively disposed near the four vertices of the first antenna array. Alternatively, the second antenna elements in four rows × four columns may be further divided into two second antenna subarrays of two rows × four columns. In addition, the two second antenna subarrays of two rows × four columns may be respectively disposed near two vertices of the first antenna array (for example, disposed near two vertices, namely an upper left vertex and an upper right vertex, or near two vertices, namely an upper left vertex and a lower left vertex). Alternatively, the second antenna elements in four rows × four columns may be all disposed near one vertex of the first antenna array (for example, disposed near an upper left vertex or a lower left vertex), and the like. Details are not described herein again.

FIG. 10b still uses an example in which the second antenna array includes the second antenna element 1, the second antenna element 2, the second antenna element 3, and the second antenna element 4. Optionally, the second antenna array may be disposed around the first antenna array. For example, as shown in FIG. 10b, the second antenna element 1, the second antenna element 2, the second antenna element 3, and the second antenna element 4 of the second antenna array may be respectively disposed outside four sides of the first antenna array.

For example, the first antenna array may include first antenna elements in three rows × three columns. Then, three first antenna elements in a first column, three first antenna elements in a third column, three first antenna elements in a first row, and three first antenna elements in a third row may respectively form the four sides of the first antenna array. In this case, the second antenna element 1 may be disposed adjacent to the three first antenna elements in the first column, the second antenna element 2 may be disposed adjacent to the three first antenna elements in the third column, the second antenna element 3 may be disposed adjacent to the three first antenna elements in the first row, and the second antenna element 4 may be disposed adjacent to the three first antenna elements in the third row. For another example, the first antenna array may include first antenna elements in eight rows × ten columns. Similarly, eight first antenna elements in a first column, eight first antenna elements in a tenth column, 10 first antenna elements in a first row, and 10 first antenna elements in an eighth row may respectively form the four sides of the first antenna array. In this way, the second antenna element 1 may be disposed adjacent to the eight first antenna elements in the first column, the second antenna element 2 may be disposed adjacent to the eight first antenna elements in the tenth column, the second antenna element 3 may be disposed adjacent to the 10 first antenna elements in the first row, the second antenna element 4 may be disposed adjacent to the 10 first antenna elements in the eighth row, and the like. Details are not described herein again.

For example, the second antenna array may include second antenna elements in four rows × four columns. The second antenna elements in four rows × four columns may be further divided into four second antenna subarrays of two rows × two columns. The four second antenna subarrays of two rows × two columns may be respectively disposed outside the four sides of the first antenna array. Alternatively, the second antenna elements in four rows × four columns may be further divided into two second antenna subarrays of two rows × four columns. In addition, the two second antenna subarrays of two rows × four columns may be respectively disposed outside two sides of the first antenna array (for example, disposed outside two sides formed by antenna elements in a first row and antenna elements in a first column). Alternatively, the second antenna elements in four rows × four columns may be all disposed outside one side of the first antenna array (for example, disposed outside a side formed by antenna elements in a first row), and the like. Details are not described herein again.

Optionally, as shown in FIG. 10b, the second antenna element 1, the second antenna element 2, the second antenna element 3, and the second antenna element 4 may be specifically disposed near central positions of the four sides respectively. The following still uses the first antenna elements in three rows × three columns as an example. The second antenna element 1 and the second antenna element 2 may be disposed on an extension line in which first antenna elements in a second row of the first antenna array are located (for example, respectively disposed adjacent to a first antenna element in a first column and a second row and a first antenna element in a third column and the second row). The second antenna element 3 and the second antenna element 4 may be disposed on an extension line in which first antenna elements in a second column of the first antenna array are located (for example, respectively disposed adjacent to a first antenna element in a second column and a first row and a first antenna element in the second column and a third row), and the like.

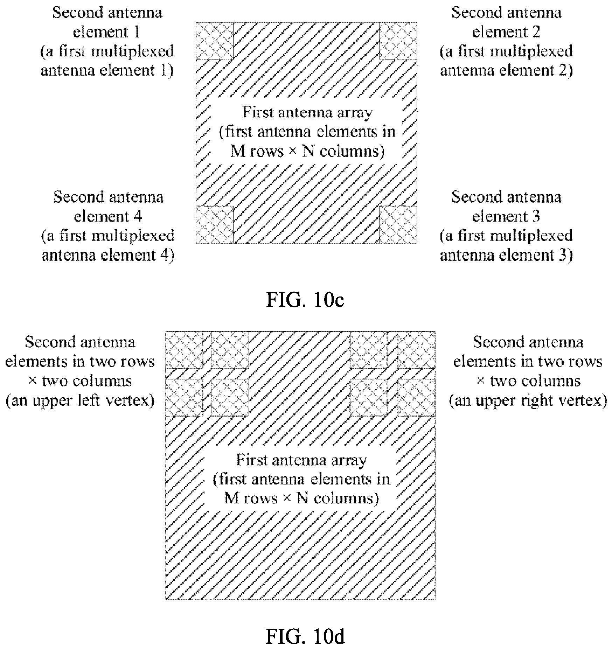

FIG. 10c still uses an example in which the second antenna array includes the second antenna element 1, the second antenna element 2, the second antenna element 3, and the second antenna element 4. Optionally, the second antenna array may multiplex a part or all of the first antenna array, that is, the second antenna element 1, the second antenna element 2, the second antenna element 3, and the second antenna element 4 may actually be four first multiplexed antenna elements of the first antenna array. Optionally, the plurality of first multiplexed antenna elements are disposed at one or more vertices of the first antenna array. For example, as shown in FIG. 10c, the second antenna element 1, the second antenna element 2, the second antenna element 3, and the second antenna element 4 of the second antenna array may multiplex first multiplexed antenna elements at four vertices of the first antenna array.

For example, the first antenna array may include first antenna elements in three rows × three columns. Then, a first antenna element in a first row and a first column, a first antenna element in the first row and a third column, a first antenna element in a third row and the first column, and a first antenna element in the third row and the third column may be respectively considered as the four vertices of the first antenna array: an upper left vertex, an upper right vertex, a lower left vertex, and a lower right vertex. First antenna elements at the four vertices are the four first multiplexed antenna elements of the first antenna array.

For another example, as shown in FIG. 10d, the first antenna array may include, for example, first antenna elements in seven rows × seven columns, and a plurality of first multiplexed antenna elements may include four first antenna elements in two rows × two columns on the upper left, and four first antenna elements in two rows × two columns on the upper right, that is, the second antenna array may multiplex subarrays on two vertices of the first antenna array. This is not specifically limited in this embodiment of this application.

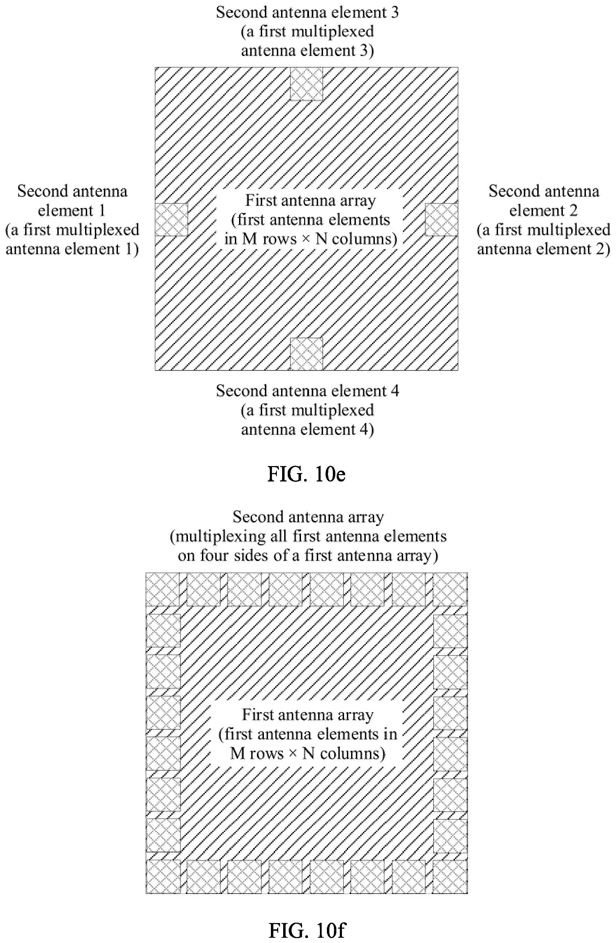

FIG. 10e still uses an example in which the second antenna array includes the second antenna element 1, the second antenna element 2, the second antenna element 3, and the second antenna element 4. Similar to FIG. 10c, the second antenna array may multiplex a part or all of the first antenna array. Optionally, a plurality of first multiplexed antenna elements may be disposed on one or more sides of the first antenna array. For example, as shown in FIG. 10e, the second antenna element 1, the second antenna element 2, the second antenna element 3, and the second antenna element 4 of the second antenna array may respectively multiplex a first multiplexed antenna element 1, a first multiplexed antenna element 2, a first multiplexed antenna element 3, and a first multiplexed antenna element 4 on four sides of the first antenna array.

For example, the first antenna array may include first antenna elements in three rows × three columns. Then, three first antenna elements in a first column, three first antenna elements in a third column, three first antenna elements in a first row, and three first antenna elements in a third row may respectively form the four sides of the first antenna array. Then, a first antenna element in a first column and a second row, a first antenna element in a third column and the second row, a first antenna element in a second column and a first row, and a first antenna element in the second column and a third row on the four sides may be multiplexed by the second antenna array as first multiplexed antenna elements. Alternatively, only a first antenna element in a first column and a second row and a first antenna element in a third column and the second row on the four sides are multiplexed by the second antenna array as first multiplexed antenna elements. Alternatively, only all first antenna elements in a first column on the four sides are multiplexed by the second antenna array as first multiplexed antenna elements, and the like.

For another example, as shown in FIG. 10f, the first antenna array may include first antenna elements in eight rows × eight columns. Similarly, eight first antenna elements in a first column, eight first antenna elements in an eighth column, eight first antenna elements in a first row, and eight first antenna elements in an eighth row may respectively form the four sides of the first antenna array. All first antenna elements on the four sides of the first antenna array may be used as first multiplexed antenna elements, that is, all first antenna elements on the four sides of the first antenna array may be multiplexed by the second antenna array. This is not specifically limited in this embodiment of this application.

It may be understood that FIG. 10a to FIG. 10f are merely examples for describing several possible antenna layouts in this embodiment of this application, and do not constitute a specific limitation on the device provided in this application. For example, in some possible embodiments, the second antenna array may include second antenna elements in two rows × N columns, and second antenna elements in each row may be disposed outside two sides of the first antenna array, and the like. Details are not described herein again.

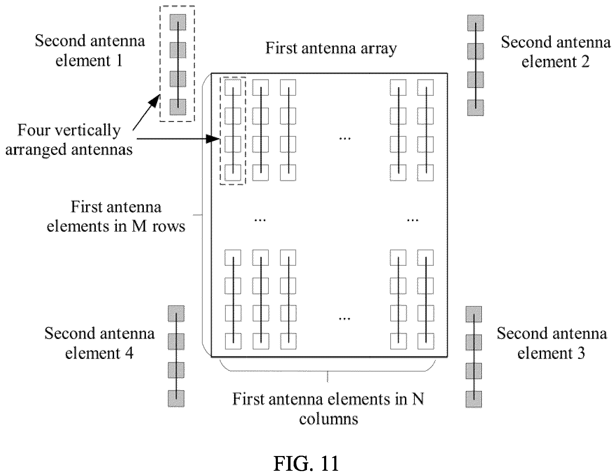

Further, FIG. 11 is a schematic diagram of a structure of an antenna element according to an embodiment of this application. For an antenna layout in FIG. 11, refer to the description of the embodiment corresponding to FIG. 10a. Details are not described herein again. Optionally, each first antenna element of the first antenna array and each second antenna element of the second antenna array may include P antennas, where P is an integer greater than or equal to 1. For example, as shown in FIG. 11, each first antenna element and each second antenna element may include four antennas that are vertically arranged in a column direction, for example, may be four vertical series-fed patch (patch) antennas. Optionally, each of antennas forming an antenna element may be a waveguide antenna or another type of antenna. This is not specifically limited in this embodiment of this application.

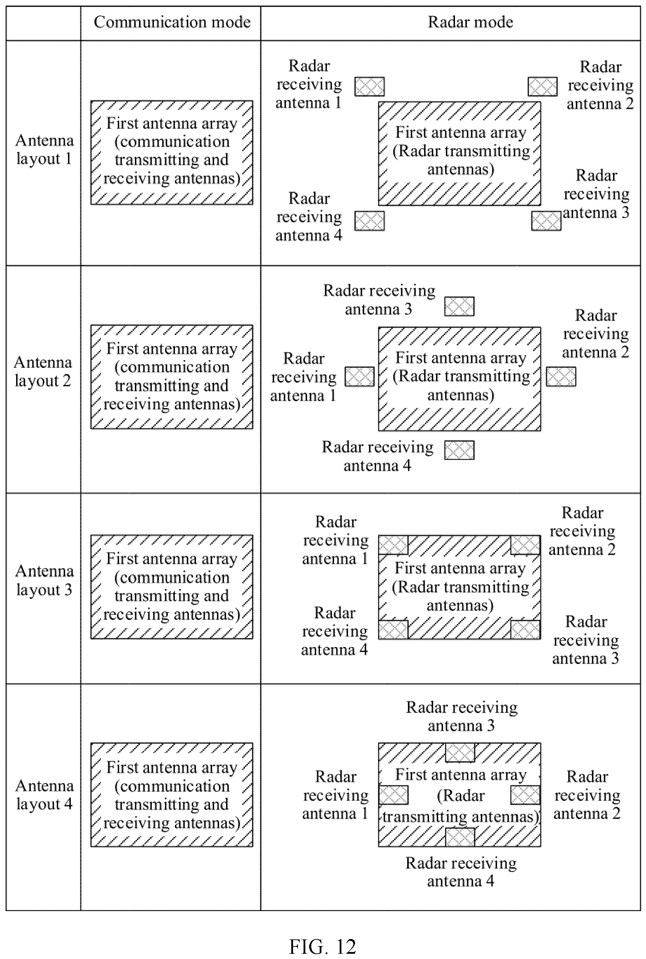

FIG. 12 is a schematic diagram of antenna allocation in both a communication mode and a radar mode according to an embodiment of this application. For an antenna layout 1 to an antenna layout 4 shown in FIG. 12, refer to the description of the embodiments corresponding to FIG. 10a to FIG. 10d. Details are not described herein again.

As shown in FIG. 12, optionally, when an integrated radar communication device (for example, an electronic device 1000) in an embodiment of this application is in a communication mode, a first antenna array in the antenna layout 1 to the antenna layout 4 may be used as a communication transmitting and receiving antenna, and is configured to perform transmission and reception of a communication signal between the integrated radar communication device and another communication device, to transmit information. Optionally, in the communication mode, directional transmission and directional reception of the communication signal may be performed by using the first antenna array based on beamforming, and the like. Details are not described herein again.

It should be noted that, it can be learned from the description of the embodiments corresponding to FIG. 10a to FIG. 10d that, in the antenna layout 1 and the antenna layout 2, a second antenna array is an antenna array additionally disposed around the first antenna array. Therefore, in the communication mode, the second antenna array in the antenna layout 1 and the antenna layout 2 may be in an idle state. However, in the antenna layout 3 and the antenna layout 4, the second antenna array is a part of the first antenna array that is multiplexed. In short, the second antenna array is essentially the part of the first antenna array. Therefore, in the communication mode, the second antenna array in the antenna layout 3 and the antenna layout 4 may also be used to transmit and receive the communication signal.

As shown in FIG. 12, optionally, when the integrated radar communication device (for example, the electronic device 1000) in this embodiment of this application is in the radar mode, the first antenna array in the antenna layout 1 to the antenna layout 4 may be used as a radar transmitting antenna, and is configured to form a plurality of radar transmitting beams in different directions based on beamforming, to implement directional transmission of radar waveforms (or radar signals) in a plurality of directions, or is configured to transmit a plurality of radar transmitting beams in different directions to a detection target, to implement multi-beam scanning on the detection target. In this way, compared with conventional single-beam scanning, scanning in this embodiment of this application can greatly improve a scanning velocity, detection efficiency, velocity resolution, and the like of a radar.

As shown in FIG. 12, optionally, when the integrated radar communication device (for example, the electronic device 1000) in this embodiment of this application is in the radar mode, the second antenna array in the antenna layout 1 to the antenna layout 4 may be used as a radar receiving antenna, and is configured to form a plurality of radar receiving beams based on beamforming, to implement directional reception of radar echoes reflected by the detection target in a plurality of directions, so that a plurality of range-Doppler maps in a plurality of directions corresponding to the detection target can be efficiently and quickly obtained. Further, as described above, in this application, there are the plurality of beams in the different directions at a radar transmitting end. Therefore, when receiving the plurality of corresponding radar echoes that include different direction information, a radar receiving end may quickly and conveniently complete high-resolution angle measurement in a conventional radar based on the plurality of pieces of direction information. This greatly reduces calculation and processing complexity of the radar receiving end, that is, reduces workload and power consumption of the radar receiving end, and prevents device overheating and shutdown, and a potential hazard to driving safety.

Similarly, in the antenna layout 3 and the antenna layout 4, the second antenna array is a part of the first antenna array that is multiplexed, that is, the second antenna array is essentially the part of the first antenna array. Therefore, in the radar mode, the second antenna array in the antenna layout 3 and the antenna layout 4 may also be used to receive a radar echo, that is, some first antenna elements of the first antenna array may be used to transmit a radar beam and may also be used to receive the radar echo.

In conclusion, in the antenna layout 1 and the antenna layout 2 shown in FIG. 12 (namely, the antenna layouts shown in FIG. 10a and FIG. 10b), multiplexing between the radar transmitting antenna and the communication transmitting and receiving antenna is implemented in this embodiment of this application. In the antenna layout 3 and the antenna layout 4 shown in FIG. 12 (namely, the antenna layouts shown in FIG. 10c and FIG. 10d), multiplexing between the radar transmitting antenna and the radar receiving antenna is further implemented in this embodiment of this application. In this way, the electronic device provided in this embodiment of this application can greatly improve a multiplexing rate of the antenna, effectively reduce a quantity of antennas and an area occupied by the antenna, and fully meets a development requirement for, miniaturization, and lightweight of the integrated radar communication device.

As described above, when the integrated radar communication device (for example, the electronic device 1000) provided in this embodiment of this application is in the radar mode, the integrated radar communication device may transmit the plurality of radar transmitting beams in the different directions to the detection target by using the first antenna array based on beamforming, to implement multi-beam scanning on the detection target. However, it should be noted that, when a quantity of radar transmitting beams is greater than one, the plurality of radar transmitting beams usually interfere with each other. If such interfere is not handled, severe impact is extremely likely to occur on velocity measurement and range measurement results of the radar. Based on this, embodiments of this application further provide a series of technical solutions in which resources are allocated to a plurality of radar transmitting waveforms at a transmitting end, so that radar echoes corresponding to the plurality of radar transmitting beams can be subsequently separated at a receiving end based on the resource allocation, to suppress and even eliminate interference between beams. This can improve a radar scanning velocity through multi-beam scanning, and ensure radar detection accuracy.

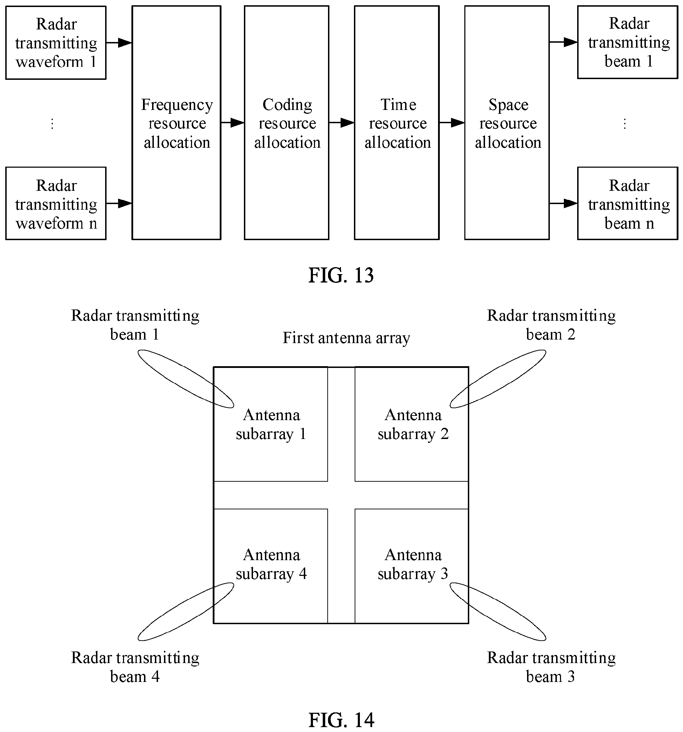

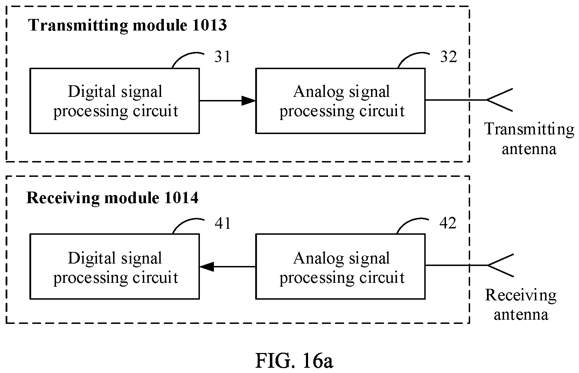

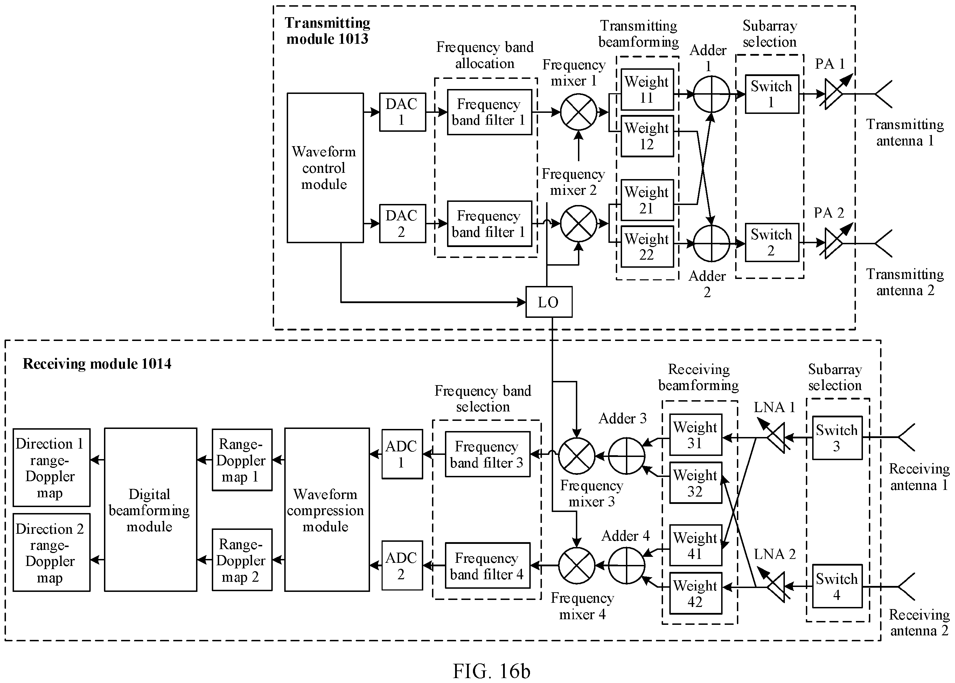

FIG. 13 is a schematic diagram of a resource allocation procedure according to an embodiment of this application. As shown in FIG. 13, in a radar mode, an integrated radar communication device in some embodiments of this application may generate a plurality of radar transmitting waveforms (for example, a radar transmitting waveform 1 to a radar transmitting waveform n, where n is an integer greater than or equal to 2) by using a transmitting module (for details, refer to the following embodiment corresponding to FIG. 16a or FIG. 16b) in the integrated radar communication device, and allocate resources to the plurality of radar transmitting waveforms. Optionally, as shown in FIG. 13, the resource allocation may include one or more of frequency resource allocation, coding resource allocation, time resource allocation, and space resource allocation. As shown in FIG. 13, after the resource allocation, the integrated radar communication device may form a plurality of corresponding radar transmitting beams in different directions (for example, a radar transmitting beam 1 to a radar transmitting beam n) through beamforming, so that the plurality of radar transmitting beams are different from each other in at least one of resources such as a frequency, code, time, and space. It may be understood that the beam is essentially related to only a direction. In some embodiments of this application, resource allocation is performed on radar waveforms (or radar signals) allocated to different beams (namely, in different directions), to implement resource allocation or beam separation for the radar transmitting beams. This is equivalent to that each radar transmitting beam is an independent transmitting channel, and does not interfere with another beam. In this case, the integrated radar communication device may separate, through signal processing by using a receiving module in the integrated radar communication device (for details, refer to the following embodiment corresponding to FIG. 16a or FIG. 16b), radar echoes corresponding to the plurality of radar transmitting beams received by a second antenna array, to suppress mutual interference between beams.

Optionally, in various types of resource allocation shown in FIG. 13, the frequency resource allocation may include frequency band allocation, frequency domain subcarrier allocation, and the like; the coding resource allocation may include frequency domain subcarrier code division, time domain fast-time code division, time domain slow-time code division, and the like; the time resource allocation may include time domain time division; and the space resource allocation may include transmitting array allocation, that is, a plurality of different antenna subarrays in a first antenna array are selected to transmit the plurality of radar transmitting beams in the different directions.

It should be noted that different radar waveforms can support different resource allocation manners. Optionally, Table 1 shows resource allocation manners (or beam separation manners) that can be supported by various radar waveforms.

(1) Frequency band allocation. Each beam occupies a non-overlapping frequency range. A radar receiving end may separate the radar echoes corresponding to the radar transmitting beams by using a frequency band selection filter. As shown in Table 1, the frequency band allocation is applicable to all waveforms, where an FMCW may further support intermediate frequency band allocation.

(2) Frequency domain subcarrier allocation. As shown in Table 1, the frequency domain subcarrier allocation is applicable only to an OFDM waveform. Each beam occupies some orthogonal subcarriers of the OFDM waveform. A radar receiving end may select a corresponding subcarrier in frequency domain, to separate the radar echoes corresponding to the radar transmitting beams.

(3) Frequency domain subcarrier code division. As shown in Table 1, the frequency domain subcarrier code division is applicable only to the OFDM waveform. Each beam occupies some orthogonal subcarriers of the OFDM waveform, and adds code in frequency domain. A radar receiving end may select the corresponding subcarrier in frequency domain, compensate for the code, and then separate the radar echoes corresponding to the radar transmitting beams.

(4) Time domain fast-time code division. As shown in Table 1, the time domain fast-time code division is applicable only to a PMCW waveform. Each beam uses PMCW time domain fast-time (intra-waveform) synchronous coding. A radar receiving end may use a method related to time domain synchronous coding to separate the radar echoes corresponding to the radar transmitting beams in a range dimension.

(5) Time domain slow-time code division. Each beam uses slow-time (inter-waveform) code. A radar receiving end may compensate for corresponding code in time domain, and separate the radar echoes corresponding to the radar transmitting beams in a Doppler dimension. As shown in Table 1, the time domain slow-time code division is applicable to all waveforms.

(6) Time domain time division. In short, beams occupy different time, and a radar receiving end may separate radar echoes of different radar transmitting beams in a time-division receiving manner. As shown in Table 1, the time domain time division is applicable to all waveforms.

(7) Transmitting array allocation. In short, beams occupy different subarrays in a transmitting antenna array, so that isolation between beams can be improved, and a beam separation degree in another beam separation manner can be further enhanced. This method can further reduce hardware complexity of a transmitting end. As shown in Table 1, the transmitting array allocation is applicable to all waveforms. For example, FIG. 14 is a schematic diagram of transmitting array allocation according to an embodiment of this application. FIG. 14 uses an example in which four radar transmitting beams are simultaneously transmitted in different directions. A radar transmitting beam 1 may be transmitted by using an antenna subarray 1 of the first antenna array, a radar transmitting beam 2 may be transmitted by using an antenna subarray 2 of the first antenna array, a radar transmitting beam 3 may be transmitted by using an antenna subarray 3 of the first antenna array, and a radar transmitting beam 4 may be transmitted by using an antenna subarray 4 of the first antenna array. Optionally, each antenna subarray may include first antenna elements in X rows × Y columns, and each antenna subarray may have a different size, and the like. This is not specifically limited in this embodiment of this application. X and Y are integers greater than or equal to 1.

Table 1

|  | FMCW | PMCW | OFDM |
|---|---|---|---|
| Frequency band allocation | Supportable | Supportable | Supportable |
| Frequency domain subcarrier allocation | Non-supportable | Non-supportable | Supportable |
| Frequency domain subcarrier code division | Non-supportable | Non-supportable | Supportable |
| Time domain fast-time code division | Non-supportable | Supportable | Non-supportable |
| Time domain slow-time code division | Supportable | Supportable | Supportable |
| Time division | Supportable | Supportable | Supportable |
| Transmitting array allocation | Supportable | Supportable | Supportable |

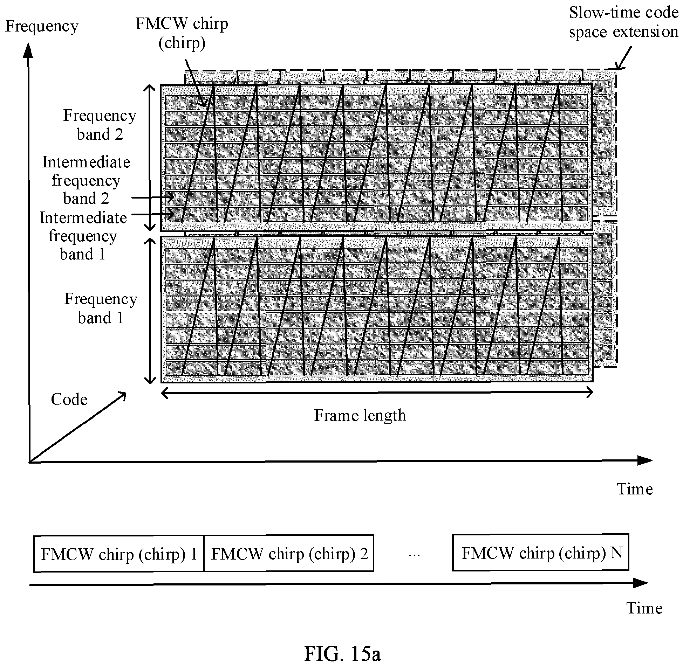

The following further describes in detail allocable resources of different radar waveforms used for beam separation. FIG. 15a to FIG. 15c are a group of schematic diagrams of allocable resources of different waveforms according to an embodiment of this application.

As shown in FIG. 15a, there are a plurality of FMCW waveforms transmitted in a time period in one frame length, for example, FMCW chirp (chirp) 1 and FMCW chirp 2 in FIG. 15a. As shown in FIG. 15a, the FMCW waveform supports frequency band allocation on a frequency resource. Frequencies of two groups of FMCW waveforms may be a frequency band 1 and a frequency band 2 respectively. Further, intermediate frequency band allocation (for example, an intermediate frequency point 1 and an intermediate frequency point 2 shown in FIG. 15a) may be further performed on each group of FMCW waveforms. In addition, the FMCW waveform further supports slow-time code space extension (namely, the time domain slow-time code division in Table 1). Details are not described herein again.

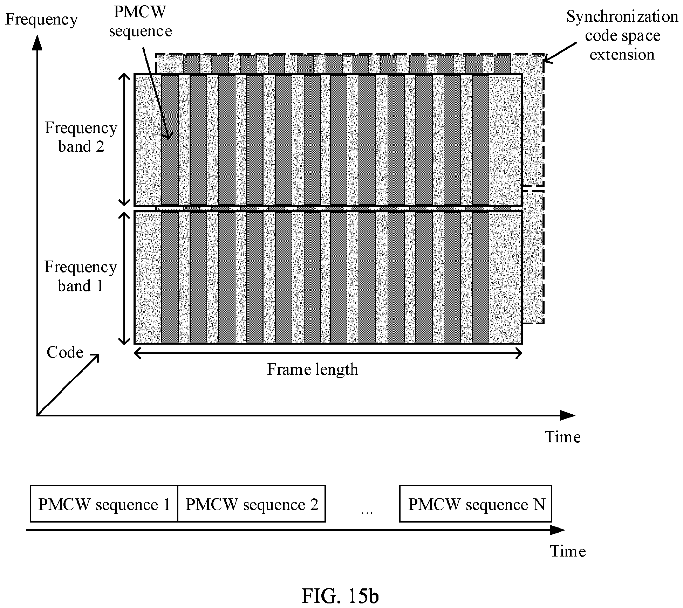

As shown in FIG. 15b, similarly, there are a plurality of PMCW waveforms transmitted in a time period in one frame length, for example, a PMCW sequence 1 and a PMCW sequence 2 in FIG. 15a. As shown in FIG. 15b, the PMCW waveform supports frequency band allocation on a frequency resource. Frequencies of two groups of PMCW waveforms may be a frequency band 1 and a frequency band 2 respectively. In addition, the PMCW waveform further supports synchronization code space extension (which may include the time domain fast code division and time domain slow code division in Table 1), and the like. Details are not described herein again.

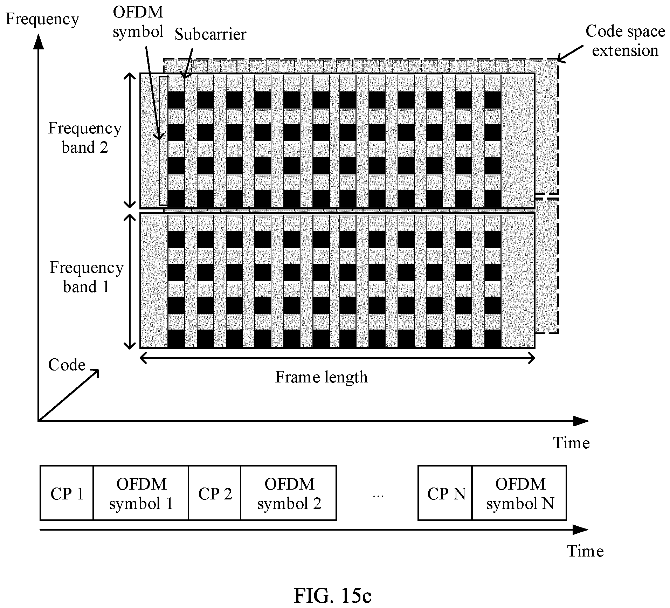

As shown in FIG. 15c, similarly, there are a plurality of OFDM waveforms transmitted in a time period in one frame length, for example, an OFDM symbol 1 and an OFDM symbol 2 in FIG. 15c. A corresponding cyclic prefix (CP) may exist before each OFDM symbol, for example, CP 1 and CP 2. The cyclic prefix is typically a cyclic structure formed by moving a signal from a tail of the OFDM symbol to a head. This ensures that a delayed OFDM signal always has an integer multiple of cycles in an FFT integration cycle, and the like. Details are not described herein again. As shown in FIG. 15b, the OFDM waveform supports frequency band allocation on a frequency resource. Frequencies of two groups of OFDM waveforms may be a frequency band 1 and a frequency band 2 respectively. In addition, the OFDM waveform further supports frequency domain subcarrier allocation on the frequency resource. For example, each small rectangle in FIG. 15c may represent one subcarrier. Further, each subcarrier may be encoded (that is, the frequency domain subcarrier code division in Table 1 is performed). In addition, as shown in FIG. 15c, the OFDM waveform further supports code space extension (for example, the time domain slow-time code division in Table 1), and the like. Details are not described herein again.

FIG. 16a is a schematic diagram of structures of a transmitting module and a receiving module according to an embodiment of this application. As shown in FIG. 16a, the transmitting module 1013 may include a digital signal processing circuit 31 and an analog signal processing circuit 32. The analog signal processing circuit 32 is coupled to a transmitting antenna, and the transmitting antenna may include, for example, a part or all of a first antenna array. The digital signal processing circuit 31 may be configured to generate a plurality of radar transmitting signals (or radar transmitting waveforms). The analog signal processing circuit 32 may be configured to transmit a plurality of radar transmitting beams in different directions by using the transmitting antenna. Optionally, the digital signal processing circuit 31 may be coupled to the analog signal processing circuit 32 by using a digital-to-analog converter (not shown in FIG. 16a), and the like. Details are not described herein again. As shown in FIG. 16a, the receiving module 1014 may include a digital signal processing circuit 41 and an analog signal processing circuit 42. The analog signal processing circuit 42 is coupled to a receiving antenna, and the receiving antenna may include, for example, a part or all of a second antenna array. The analog signal processing circuit 42 may be configured to receive, by using the receiving antenna, radar echoes corresponding to the plurality of radar transmitting beams in the different directions. The digital signal processing circuit 41 may be configured to obtain, through calculation based on the radar echoes, range-Doppler maps corresponding to the different directions, and the like. Optionally, the digital signal processing circuit 41 may be coupled to the analog signal processing circuit 42 by using an analog-to-digital converter (not shown in FIG. 16a). Details are not described herein again.

FIG. 16b is a schematic diagram of structures of another transmitting module and another receiving module according to an embodiment of this application. Optionally, the transmitting module 1013 may include a plurality of transmitting circuits, and correspondingly, the receiving module 1014 may also include a plurality of receiving circuits. It may be understood that, FIG. 16b uses an example of two transmitting circuits, two receiving circuits, two corresponding radar transmitting waveforms, two radar transmitting beams in different directions, and two transmitting antennas/receiving antennas. In actual application, there may be more radar transmitting waveforms, more different radar transmitting beams, and the like. An implementation is similar. This is not specifically limited in this embodiment of this application.

As shown in FIG. 16b, the transmitting module 1013 may specifically include a waveform control module, a digital-to-analog converter (digital-to-analog converter, DAC) 1/DAC 2, a frequency band filter 1/frequency band filter 2 used for frequency band selection, a frequency mixer 1/frequency mixer 2, a plurality of weights (which may include a plurality of phase shifters and gain control units, and the like, or may include a digital processing unit used for transmitting beamforming) used for transmitting beamforming, an adder 1/adder 2, a switch 1/switch 2 used for subarray selection, and a power amplifier (power amplifier, PA) 1/PA 2 that are sequentially coupled. As shown in FIG. 16b, the PA 1 and the PA 2 are respectively connected to a transmitting antenna 1 and a transmitting antenna 2. Each of the transmitting antenna 1 and the transmitting antenna 2 may be a first antenna element of a first antenna array, or may be a first antenna subarray in a first antenna array. As shown in FIG. 16b, each transmitting circuit may select a corresponding subarray (for example, the transmitting antenna 1) from the first antenna array by using a subarray selection switch (for example, the switch 1) in the transmitting circuit, to transmit one of the plurality of radar transmitting beams.

Optionally, refer to a schematic diagram of structure of the receiving module 1013 in FIG. 16a. It may be understood that a circuit structure (namely, the waveform control module) on the left of the DAC 1/DAC 2 in FIG. 16b may belong to the digital signal processing circuit 31. Correspondingly, a circuit structure on the right of the DAC 1/DAC 2 (including the frequency band filter 1/frequency band filter 2, the frequency mixer 1/frequency mixer 2, the adder 1/adder 2, the switch 1/switch 2, and the like) may belong to the analog signal processing circuit 32.

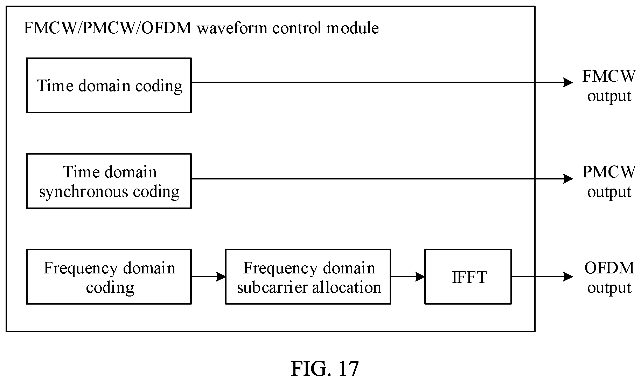

The waveform control module may be specifically an FMCW/PMCW/OFDM waveform control module, and is configured to output two independent radar transmitting waveforms (or radar transmitting signals). The two radar transmitting waveforms may be a same waveform or different waveforms, for example, may be both PMCW waveforms, or may be an FMCW waveform and a PMCW waveform. This is not specifically limited in this embodiment of this application. FIG. 17 is a schematic diagram of a structure of a waveform control module according to an embodiment of this application. As shown in FIG. 17, in the FMCW/PMCW/OFDM waveform control module, an FMCW waveform may be output through time domain code (namely, the time domain slow-time code division shown in Table 1), a PMCW waveform may be output through time domain synchronous coding (which may include the time domain fast-time code division and the time domain slow-time code division in Table 1), and an OFDM waveform may be output through frequency domain coding, frequency domain subcarrier allocation, and inverse fast Fourier transform (inverse fast fourier transform, IFFT) that are sequentially performed. Clearly, the waveform control module performs a series of resource allocation on the output waveforms. Optional, as shown in FIG. 16b, the two radar transmitting waveforms output by the waveform control module may further subsequently performs a series of resource allocation such as frequency band allocation and transmitting subarray selection by using the frequency band filter 1 and the frequency band filter 2, and the switch 1 and the switch 2 respectively, and transmit two radar transmitting beams in different directions that have different resource allocation through transmitting beamforming (for example, by configuring a respective weight, for example, as shown in FIG. 16b, by multiplying by a respective weight (for example, a weight 11, a weight 12, a weight 21, and a weight 22), and in some possible embodiments, by dividing by or adding a respective weight, or the like) by using the transmitting antenna 1 and the transmitting antenna 2, to implement directional transmission of the two radar transmitting waveforms with the different resource allocation.

It should be noted that the structure shown in FIG. 17 is merely an example for description. Usually, a set of hardware structure is usually used to output only one waveform. For example, the FMCW waveform control module may be configured to output a plurality of FMCW waveforms. For another example, the PMCW waveform control module may be configured to output a plurality of PMCW waveforms. For another example, the OFDM waveform control module may be configured to output a plurality of OFDM waveforms. Optionally, if a plurality of different radar transmitting waveforms need to be output, two different hardware structures may be used. For example, the FMCW waveform control module and the PMCW waveform control module are disposed in the transmitting module 1013, the FMCW waveform control module is connected to two DACs (for example, the DAC 1 and the DAC 2), and the PMCW waveform control module is connected to other two DACs (for example, a DAC 3 and a DAC 4). Then, two FMCW waveforms, two PMCW waveforms, and the like may be simultaneously output. This is not specifically limited in this embodiment of this application.

As shown in FIG. 16b, the receiving module 1014 may specifically include a switch 3/switch 4 used for subarray selection, a low-noise amplifier (low-noise amplifier, LNA) 1/LNA 2, a plurality of weights (which may include a plurality of phase shifters and gain control units, and the like, or may include a digital processing unit used for transmitting beamforming) used for receiving beamforming, an adder 3/adder 4, a frequency mixer 3/frequency mixer 4, a frequency band filter 3/frequency band filter 4 used for frequency band selection, an analog-to-digital converter (analog-to-digital Converter, ADC) 1/ADC 2, a waveform compression module, and a digital beamforming module that are sequentially coupled. Optionally, as shown in FIG. 16b, a frequency mixer (for example, a frequency mixer 1 and a frequency mixer 2) in each transmitting circuit of the transmitting module 1013 and a frequency mixer (for example, a frequency mixer 1 and a frequency mixer 2) in each transmitting circuit of the transmitting module 1013 may share one local oscillator (local oscillator, LO). As shown in FIG. 16b, two waveforms output by the waveform compression module may be used to respectively generate a range-Doppler map 1 and a range-Doppler map 2. Further, the digital beamforming module may further output a range-Doppler map corresponding to a direction 1 and a range-Doppler map corresponding to the direction 1. As shown in FIG. 16b, the LNA 1 and the LNA 2 are respectively connected to a receiving antenna 1 and a receiving antenna 2. Each of the receiving antenna 1 and the receiving antenna 2 may be a second antenna element of the second antenna array, or may be a second antenna subarray in the second antenna array. Optionally, the receiving module 1014 may form two corresponding radar receiving beams in different directions by using the receiving antenna 1, the receiving antenna 2 through receiving beamforming, to implement directional reception of radar echoes corresponding to the two radar transmitting beams. Then, the switch 3 and the switch 4 in FIG. 16b, and the frequency band filter 3 and the frequency band filter 4 are used to perform a series of echo separation on the radar echoes corresponding to the two radar transmitting beams based on the foregoing resource allocation, and then the radar echoes are input to the ADC 1 and the ADC 2 respectively.

Optionally, refer to a schematic diagram of structure of the transmitting module 1014 in FIG. 16a. It may be understood that a circuit structure (including the waveform compression module, the digital beamforming module, and the like) on the left of the ADC 1/ADC 2 in FIG. 16b may belong to the digital signal processing circuit 41. Correspondingly, a circuit structure on the right of the ADC 1/ADC 2 (including the switch 3/switch 4, the LNA 1/LNA 2, the adder 3/adder 4, the frequency mixer 3/frequency mixer 4, and the like) may belong to the analog signal processing circuit 42.

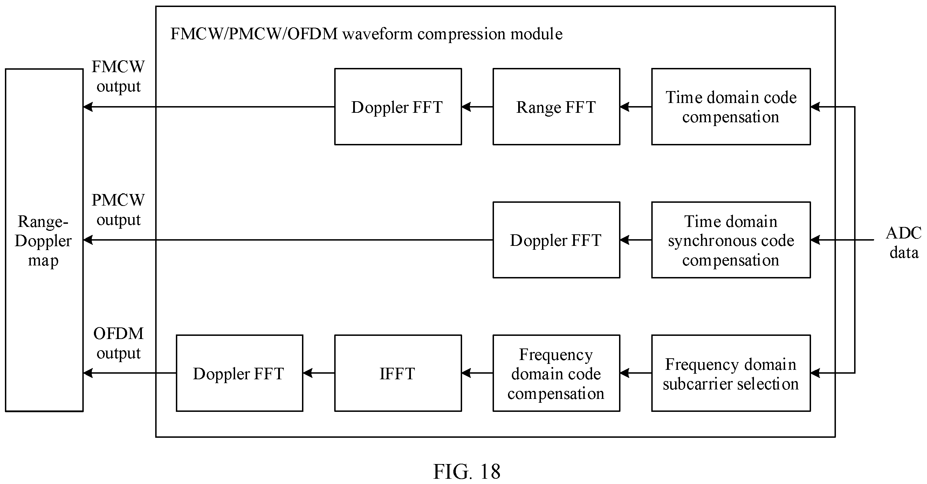

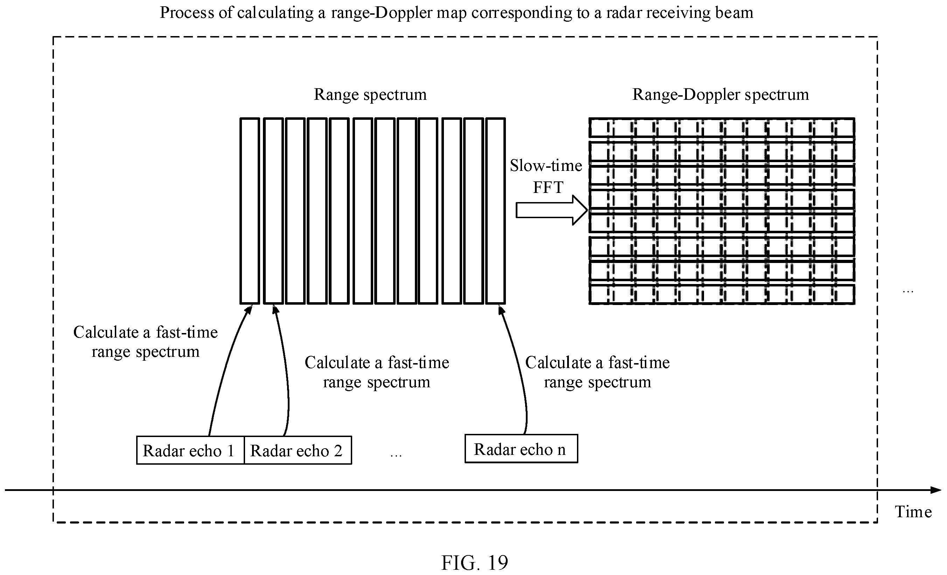

Optionally, FIG. 18 is a schematic diagram of a structure of a waveform compression module according to an embodiment of this application. As shown in FIG. 18, in an FMCW/PMCW/OFDM waveform compression module, ADC data (for example, output data of the ADC 1 in FIG. 16b) may output a corresponding FMCW waveform through time domain code compensation, range fast Fourier transform (fast fourier transform, FFT), and Doppler FFT; the ADC data may output a corresponding PMCW waveform through time domain synchronous coding correlation and Doppler FFT; and the ADC data can output a corresponding OFDM waveform through frequency domain subcarrier selection, frequency domain code compensation, IFFT, and Doppler FFT. Similarly, the waveform compression module performs a series of echo separation (or beam separation) on the waveform output by the waveform compression module. Then, a range-Doppler map corresponding to each radar receiving beam can be calculated. Optionally, FIG. 19 is a schematic diagram of a process of calculating a range-Doppler map according to an embodiment of this application. FIG. 19 uses an example of calculating a range-Doppler map corresponding to one radar receiving beam (namely, a radar echo corresponding to one radar transmitting beam). As shown in FIG. 19, one radar transmitting beam is transmitted to a target, the target reflects a corresponding radar echo (or an echo signal). The radar echo received by a radar receiving end may contain n radar waveforms (namely, waveforms in a time period). The radar receiving end can calculate a fast-time range spectrum for each radar waveform, to obtain a range spectrum corresponding to one radar receiving beam. Then, a range-Doppler map corresponding to the radar receiving beam can be obtained through slow-time FFT based on the range spectrum.

As described above, in summary, the integrated radar communication device provided in this embodiment of this application may simultaneously transmit the plurality of radar transmitting beams in the different directions, and perform echo separation, through resource allocation, on the radar echoes corresponding to the plurality of radar transmitting beams, to suppress interference of the plurality of beams. Finally, the range-Doppler maps in the different directions corresponding to the plurality of radar transmitting beams in the different directions may be output.

It should be understood that FIG. 16b, FIG. 17, and FIG. 18 are merely examples for description, and do not constitute a specific limitation on the transmitting module and the receiving module. In some possible embodiments, each of the transmitting module and the receiving module may include more or fewer components than those shown in FIG. 16b, FIG. 17, and FIG. 18. Optionally, a part of both the transmitting module and the receiving module may be further multiplexed to transmit and receive a communication signal, and the like. This is not specifically limited in this embodiment of this application.

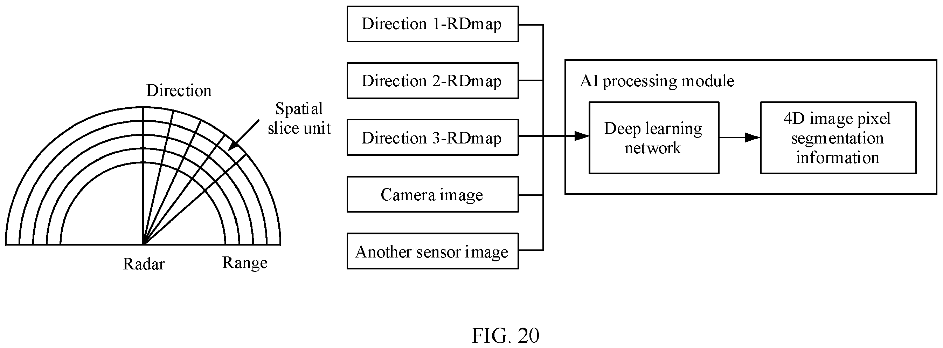

Further, FIG. 20 is a schematic diagram of a process of processing a range-Doppler map by using AI according to an embodiment of this application. As shown in FIG. 20, as described above, a finally obtained range-Doppler map of each radar transmitting beam includes target information of spatial slice units in one direction. Further, as shown in FIG. 20, the integrated radar communication device (for example, the electronic device 1000) provided in this embodiment of this application may further include an AI processing module (for example, may include one or more AI processors), and the AI processing module may be connected to the receiving module 1014. Optionally, as shown in FIG. 20, obtained range-Doppler maps (for example, including a direction 1-RDmap, a direction 2-RDmap, and a direction 3-RDmap in FIG. 20) in all directions may be input to a deep learning network in the AI processing module together with image information of another sensor (for example, an image collected by a camera), to perform deep fusion with the image information of the another sensor. Then, 4D (a coordinates X, a coordinate Y, a coordinate Z, and a radial velocity V) image pixel segmentation information of a surrounding environment, or image pixel segmentation information of more dimensions (for example, further including a color and echo intensity) is output. This is not specifically limited in this embodiment of this application.

It should be noted that, as described above, there is frequency resources allocation in resource allocation of the plurality of radar transmitting beams. Therefore, frequency bands (or frequency points) used by the plurality of radar transmitting beams may be different. In an existing radar angle measurement technology, beams of a same frequency band are usually used, and different frequency bands usually cause inaccurate angle measurement. An AI technology is a technology based on a deep learning network, and can handle a highly nonlinear problem existing in beams of different frequency bands, that is, data of different directions and different frequency points may be correctly processed by using the AI technology. Therefore, in this embodiment of this application, the AI technology may further be applied, to further improve accuracy of radar angle measurement.

The following describes, by using specific examples for calculation, a multi-beam scanning process of the integrated radar communication device in some possible embodiments, to more intuitively describe beneficial effects brought by this application.

Optionally, the integrated radar communication device may be specifically, for example, a multi-beam vehicle-mounted imaging radar that integrates communication. The antenna layout shown in FIG. 11 is used as an example. The integrated radar communication device may specifically include first antenna elements in 64 rows $\times$ 16 columns (that is, including 64 $\times$ 16 radio frequency channels), and four second antenna elements respectively located near four vertices of the first antenna array. Each of the first antenna element and the second antenna element includes four vertical series-fed patch antennas.

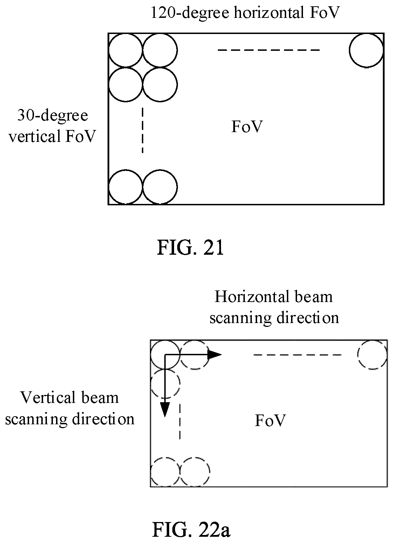

Optionally, FIG. 21 is a schematic diagram of a visible range of an antenna array according to an embodiment of this application. As shown in FIG. 21, a field of view (field of view, FoV) or a scanning range of the first antenna array in the integrated radar communication device may be 120 degrees horizontally and 30 degrees vertically. In the field of view, 3600 scanning beams (namely, radar transmitting beams) at an interval of 1 degree $\times$ 1 degree may be formed by using the first antenna array. A width of each scanning beam may be 0.8 degrees $\times$ 0.8 degrees, roll-off power may be 3 dB, and the like. This is not specifically limited in this embodiment of this application.

FIG. 22a is a schematic diagram of single-beam scanning according to an embodiment of this application. FIG. 22a uses an example for calculating Doppler by using a conventional single-beam time division scanning method in which each waveform occupies 25 $\mu$s, and each scanning beam occupies four consecutive waveforms. A time period for entire FoV wavebeam scanning is $25 \times 4 \times 3600 \times 10^{-3} = 360$ ms. It is assumed that a range spectrum data dimension is 512, a range-Doppler map dimension corresponding to each beam direction obtained through receiving signal processing is $512 \times 4$, resulting in very low Doppler dimension resolution and accuracy.

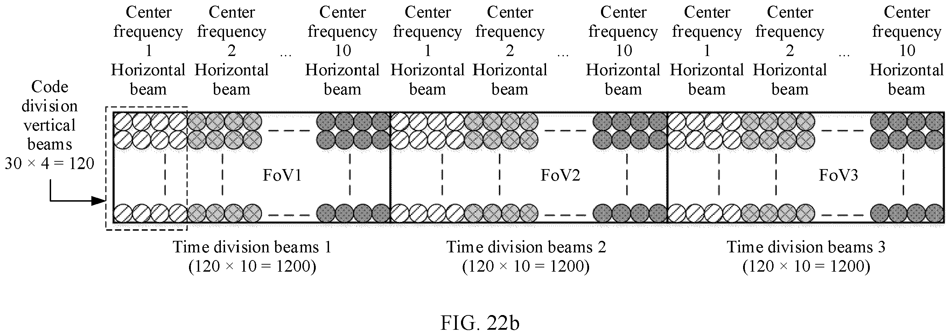

FIG. 22b is a schematic diagram of multi-beam scanning according to an embodiment of this application. As shown in FIG. 22b, according to a multi-beam scanning manner provided in an embodiment of this application, one group of $(30 \times 4) \times 10 = 1200$ simultaneous scanning beams may be obtained through code division (for example, time domain fast code division) and frequency division (for example, frequency band allocation), and time division is performed on three groups of scanning beams. Then, each group of beams can cover a 40-degree horizontal FoV, and the three groups of beams can cover a 120-degree horizontal FoV in total. Based on this, an example in which each waveform occupies 25 $\mu$s is also used. In this application, each beam may occupy 512 consecutive waveforms for calculating Doppler. In other words, a scanning time period of a single beam is prolonged, improving velocity resolution of a radar. Similarly, it is assumed that a range spectrum data dimension is 512, a range-Doppler map dimension corresponding to each beam direction obtained through receiving signal processing in this application is $512 \times 512$, greatly improving Doppler dimension resolution and accuracy. In some possible embodiments, simultaneous transmission of 3600 beams may be further supported. In this way, a dimension of a range-Doppler map corresponding to each output beam direction may be larger, and Doppler dimension resolution and accuracy are higher.

Further, using a plurality of beams and time domain fast code division as an example, a radar transmitting signal X is defined as follows:

$$X = A(S \odot C)$$

S: Ns $\times$ Nsamp, which is samples of Ns transmitting waveforms, may be a column vector, and each row represents one transmitting waveform. C: Ns $\times$ Nsamp, which is codes corresponding to Ns transmitting waveforms, may be a column vector, and each row represents one code. $\odot$ is a matrix point multiplication operation, and SOC may represent coding of each transmitting waveform. Ns is an integer greater than or equal to 2. A: $N_T \times$ Ns, which is a beamforming weight of a transmitting antenna array corresponding to the Ns transmitting beams, and $N_T$ is a transmitting antenna. All the matrices may be complex numbers. For example, S may be an FMCW waveform, and C may be an inter-waveform Hadamard (Hadamard) code, and may be specifically a code whose dimension is 4.

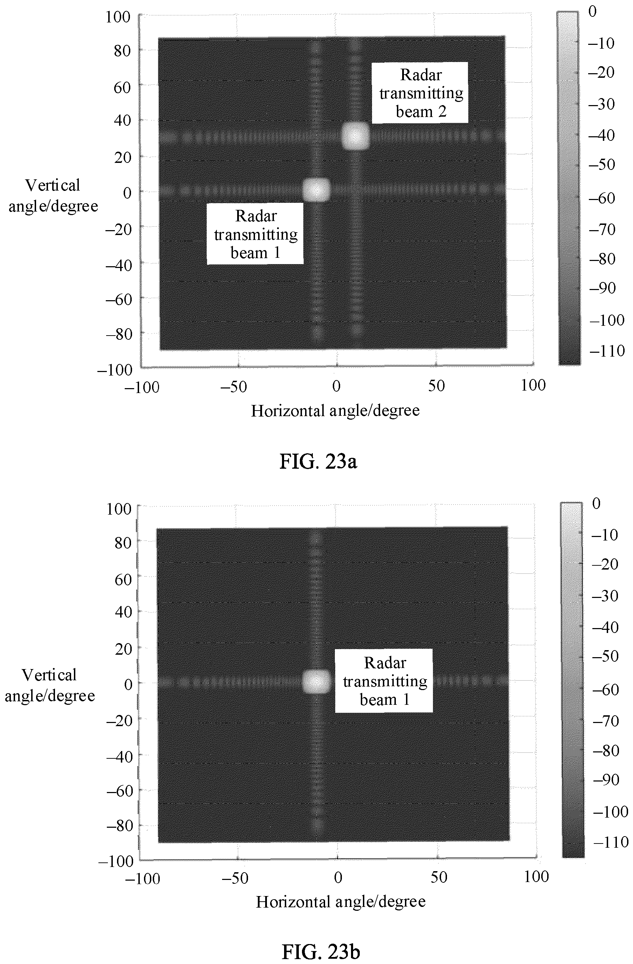

For example, FIG. 23a to FIG. 23c are a group of schematic diagrams of beam splitting according to an embodiment of this application. As shown in FIG. 23a, an integrated radar communication device may form, by using a first antenna array, two radar transmitting beams pointing to (-10, 0) and (10, 30). Echoes of the two radar transmitting beams are simultaneously received by a receiving end, and the receiving end may separate the echoes Y corresponding to the two radar transmitting beams by using Hadamard codes corresponding to the radar transmitting beams.

$$Y=X \odot C^*$$

Optionally, if there are a relatively large quantity of receiving channels (that is, a second antenna array has a relatively large scale), digital beamforming $W_R^H$ may be used to enhance separation of the two radar transmitting beams.

$$Y=W_R^H(X \odot C^*)$$

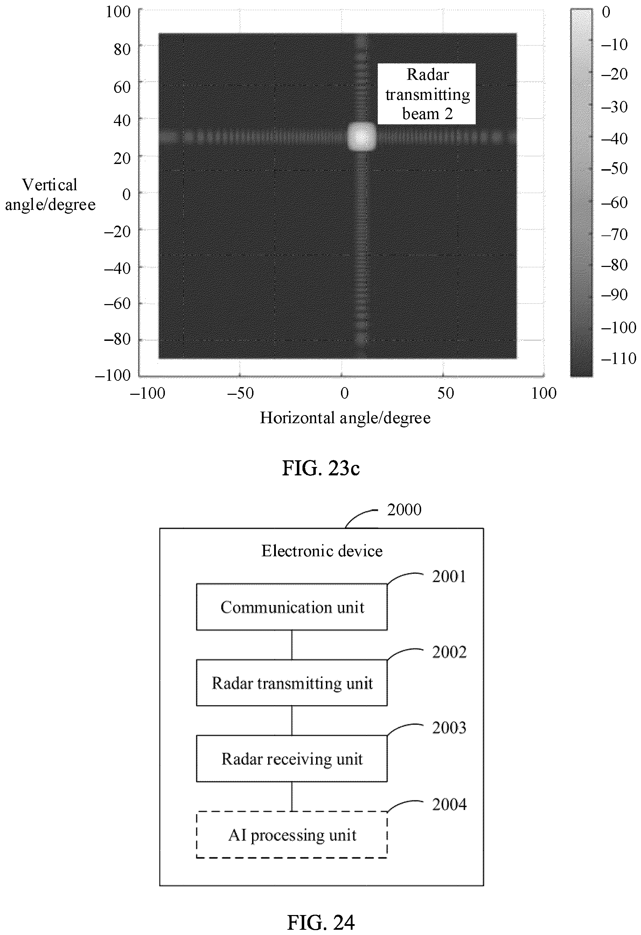

C* is a conjugate of C. FIG. 23b and FIG. 23c respectively show that the integrated radar communication device successfully separates the two radar transmitting beams pointing to (-10, 0) and (10, 30) through time domain synchronous coding correlation at the receiving end, and further separates the radar echoes corresponding to the two radar transmitting beams.

In conclusion, this application provides the electronic device, to greatly improve a multiplexing rate of a radar antenna and a communication antenna. This reduces an area occupied by an antenna array, further reduces production costs, and meets a development and application requirement of device integration, miniaturization, and lightweight. In addition, the plurality of radar transmitting beams in the different directions are simultaneously transmitted. This improves an overall radar scanning velocity, correspondingly increases the scanning time period of the single beam, and further improves the radar velocity resolution.

Further, this application further provides a series of technical solutions in which resources are allocated to the plurality of radar transmitting beams, so that radar echoes corresponding to the plurality of radar transmitting beams can be subsequently separated at a receiving end based on the resource allocation, to suppress and even eliminate interference between beams. This can improve a radar scanning velocity through multi-beam scanning, and ensure radar detection accuracy and reliability.

In addition, there are the plurality of beams in the different directions at a radar transmitting end. Therefore, when receiving the plurality of corresponding radar echoes that include different direction information, a radar receiving end may quickly and conveniently complete high-resolution angle measurement in a conventional radar based on the plurality of pieces of direction information. This greatly reduces calculation and processing complexity of the radar receiving end, that is, reduces workload and power consumption of the radar receiving end, and effectively prevents device overheating and shutdown, and a potential hazard to driving safety.

It should be understood that a basic principle of the series of technical solutions in embodiments of this application may be further applied to a multi-channel system other than a radio frequency phased array, for example, an ultrasonic array. This is not specifically limited in embodiments of this application.

FIG. 24 is a schematic diagram of a structure of an electronic device according to an embodiment of this application. The electronic device 2000 may be, for example, the integrated radar communication device 100 shown in FIG. 4 or the electronic device 1000 shown in FIG. 7, and may be applied to the system architecture shown in FIG. 4 and the application scenario shown in FIG. 6. As shown in FIG. 24, the electronic device 2000 may include a communication unit 2001, a radar transmitting unit 2002, and a radar receiving unit 2003. Detailed descriptions of the units are as follows.

In a communication mode, the communication unit 2001 performs transmission and reception of a communication signal between the electronic device and a target device by using a first antenna array.

In a radar mode, the radar transmitting unit 2002 transmits radar transmitting beams to a target object by using the first antenna array.

In the radar mode, the radar receiving unit 2003 receives, by using the second antenna array, a radar echo reflected by the target object.

In a possible implementation, the radar transmitting unit 2002 is specifically configured to: in the radar mode, transmit the radar transmitting beam to the target object by multiplexing a part or all of the first antenna array.

In a possible implementation, the second antenna array includes four second antenna subarrays. The four second antenna subarrays are respectively located around four vertices of the first antenna array, or the four second antenna subarrays are respectively located outside four sides of the first antenna array.

In a possible implementation, the second antenna array includes four second antenna subarrays, and the four second antenna subarrays are four first antenna subarrays in the first antenna array. The four first antenna subarrays are respectively located at four vertices of the first antenna array, or the four first antenna subarrays are respectively located on four sides of the first antenna array.

In a possible implementation, the first antenna array includes a plurality of first antenna elements, the second antenna array includes the plurality of second antenna elements, each of the first antenna elements and each of the second antenna elements includes P antennas, and P is an integer greater than or equal to 1.

In a possible implementation, the device includes a transmitting module and a receiving module. The transmitting module includes a plurality of transmitting circuits. Each transmitting circuit includes: a digital-to-analog converter, a frequency band filter, a frequency mixer, a subarray selection switch, and a power amplifier that are sequentially coupled. The power amplifier in each transmitting circuit is coupled to the first antenna element of the first antenna array. The receiving module includes a plurality of receiving circuits. Each receiving circuit includes a subarray selection switch, a low-noise amplifier, a frequency mixer, a frequency band filter, and an analog-to-digital converter that are sequentially coupled. The subarray selection switch in each receiving circuit is coupled to the second antenna element of the second antenna array. The frequency mixer in the transmitting circuit and the frequency mixer in the receiving circuit share one local oscillator.

In a possible implementation, the radar transmitting unit 2002 is specifically configured to: by using the transmitting module, in the radar mode, generate a plurality of radar transmitting waveforms, and separately allocate resources to the plurality of radar transmitting waveforms, where the resource allocation includes one or more of frequency resource allocation, coding resource allocation, time resource allocation, and space resource allocation; and configure a weight for each of the plurality of radar transmitting waveforms, form a plurality of radar transmitting beams in different directions by using the first antenna array, and transmit the plurality of radar transmitting beams in the different directions to the target object, where the plurality of radar transmitting beams are different from each other in at least one of a frequency resource, a coding resource, a time resource, and a space resource.

In a possible implementation, the radar transmitting waveform is any one of a frequency-modulated continuous wave FMCW, a phase-modulated continuous wave PMCW, and an orthogonal frequency division multiplexing OFDM modulated wave.

In a possible implementation, the space resource allocation includes transmitting array allocation; and the radar transmitting unit 2002 is specifically configured to: by using the transmitting module, select a $j^{th}$ first antenna subarray in the first antenna array by using a subarray selection switch in a $j^{th}$ transmitting circuit, and transmit a $j^{th}$ radar transmitting beam in the plurality of radar transmitting beams by using the $j^{th}$ first antenna subarray, where the $j^{th}$ first antenna subarray includes one or more first antenna elements, and j is an integer greater than or equal to 1.

In a possible implementation, the radar receiving unit 2003 is specifically configured to: by using the receiving module, in the radar mode, receive, by using the second antenna array, radar echoes that correspond to the plurality of radar transmitting beams and that are reflected by the target object, and separate, based on resource allocation corresponding to each of the plurality of radar transmitting beams, the radar echoes corresponding to the plurality of radar transmitting beams, to obtain a plurality of radar receiving beams in different directions; and obtain a plurality of range-Doppler maps corresponding to the different directions based on the plurality of radar receiving beams in the different directions.

In a possible implementation, the device further includes an artificial intelligence AI processing unit 2004. The radar receiving unit 2003 is further configured to send the plurality of range-Doppler maps to the AI processing unit 2004. The AI processing unit 2004 is configured to: receive the plurality of range-Doppler maps, and obtain image pixel segmentation information of the target object based on the plurality of range-Doppler maps.

It should be noted that for a function of each function unit of the electronic device 2000 described in this embodiment of this application, reference may be made to the related descriptions of the embodiments shown in FIG. 4 to FIG. 23c. Details are not described herein again.

In the foregoing embodiments, the descriptions of each embodiment have respective focuses. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by a person skilled in the art that embodiments described in this specification all belong to preferable embodiments, and the related actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to implement the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software function unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The software product is stored in a storage medium and includes several instructions for instructing a computer device (which may be a personal computer, a server, or a network device, and may be specifically a processor in the computer device) to perform all or some of the steps of the methods described in embodiments of this application. The storage medium includes any medium that can store program code, for example, a USB flash drive, a removable hard disk, a magnetic disk, an optical disc, a read-only memory (Read-Only Memory, ROM for short), or a random access memory (Random Access Memory, RAM for short).

The foregoing embodiments are only intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application.

**Claims**

1. An electronic device, comprising a first antenna array and a second antenna array, wherein

   in a communication mode, transmission and reception of a communication signal are performed between the electronic device and a target device by using the first antenna array;
   in a radar mode, radar transmitting beams are transmitted to a target object by using the first antenna array; and
   in the radar mode, a radar echo reflected by the target object is received by using the second antenna array.

2. The device according to claim 1, wherein in the radar mode, the radar transmitting beams are transmitted to the target object by using a part or all of the first antenna array.

3. The device according to claim 1 or 2, wherein the second antenna array is disposed around the first antenna array.

4. The device according to claim 3, wherein the second antenna array comprises a plurality of second antenna elements, and the plurality of second antenna elements are disposed adjacent to one or more vertices of the first antenna array.

5. The device according to claim 3 or 4, wherein the second antenna array comprises the plurality of second antenna elements, and the plurality of second antenna elements are disposed adjacent to one or more sides of the first antenna array.

6. The device according to claim 1 or 2, wherein the first antenna array comprises a plurality of first multiplexed antenna elements, and the plurality of first multiplexed antenna elements are multiplexed by the second antenna array.

7. The device according to claim 6, wherein the plurality of first multiplexed antenna elements are disposed at one or more vertices of the first antenna array.

8. The device according to claim 6 or 7, wherein the plurality of first multiplexed antenna elements are disposed on one or more sides of the first antenna array.

9. The device according to any one of claims 1 to 8, wherein the first antenna array comprises a plurality of first antenna elements, the second antenna array comprises the plurality of second antenna elements, each of the first antenna elements and each of the second antenna elements comprises P antennas, and P is an integer greater than or equal to 1.

10. The device according to any one of claims 1 to 9, wherein the device comprises a transmitting module and a receiving module, wherein

the transmitting module comprises a plurality of transmitting circuits, wherein each transmitting circuit comprises: a digital-to-analog converter, a frequency band filter, a frequency mixer, a subarray selection switch, and a power amplifier that are sequentially coupled; and the power amplifier in each transmitting circuit is coupled to the first antenna element of the first antenna array; and

the receiving module comprises a plurality of receiving circuits, wherein each receiving circuit comprises a subarray selection switch, a low-noise amplifier, a frequency mixer, a frequency band filter, and an analog-to-digital converter that are sequentially coupled; the subarray selection switch in each receiving circuit is coupled to the second antenna element of the second antenna array; and the frequency mixer in the transmitting circuit and the frequency mixer in the receiving circuit share one local oscillator.

11. The device according to claim 10, wherein the transmitting module is configured to:

in the radar mode, generate a plurality of radar transmitting waveforms, and separately allocate resources to the plurality of radar transmitting waveforms, wherein the resource allocation comprises one or more of frequency resource allocation, coding resource allocation, time resource allocation, and space resource allocation; and configure a weight for each of the plurality of radar transmitting waveforms, form a plurality of radar transmitting beams in different directions by using the first antenna array, and transmit the plurality of radar transmitting beams in the different directions to the target object, wherein the plurality of radar transmitting beams are different from each other in at least one of a frequency resource, a coding resource, a time resource, and a space resource.

12. The device according to claim 11, wherein the radar transmitting waveform is any one of a frequency-modulated continuous wave FMCW, a phase-modulated continuous wave PMCW, and an orthogonal frequency division multiplexing OFDM modulated wave.

13. The device according to claim 11 or 12, wherein the space resource allocation comprises transmitting array allocation, and the transmitting module is specifically configured to:
select a $j^{th}$ first antenna subarray in the first antenna array by using a subarray selection switch in a $j^{th}$ transmitting circuit, and transmit a $j^{th}$ radar transmitting beam in the plurality of radar transmitting beams by using the $j^{th}$ first antenna subarray, wherein the $j^{th}$ first antenna subarray comprises one or more first antenna elements, and j is an integer greater than or equal to 1.

14. The device according to any one of claims 11 to 13, wherein the receiving module is configured to:

in the radar mode, receive, by using the second antenna array, radar echoes that correspond to the plurality of radar transmitting beams and that are reflected by the target object, and separate, based on resource allocation corresponding to each of the plurality of radar transmitting beams, the radar echoes corresponding to the plurality of radar transmitting beams, to obtain a plurality of radar receiving beams in different directions; and obtain a plurality of range-Doppler maps corresponding to the different directions based on the plurality of radar receiving beams in the different directions.

15. The device according to claim 14, wherein the device further comprises an artificial intelligence AI processing module, and the AI processing module is connected to the receiving module;

the receiving module is further configured to send the plurality of range-Doppler maps to the AI processing module; and
the AI processing module is configured to: receive the plurality of range-Doppler maps, and obtain image pixel segmentation information of the target object based on the plurality of range-Doppler maps.

16. A terminal, comprising a processor and a memory, wherein the terminal is configured to implement a function of the electronic device according to any one of claims 1 to 11.

Radar antenna array

Transmitting
antenna × 4

Receiving
antenna × 4

Receiving
antenna × 4

Virtual MIMO receiving
antenna array (8 × 8)

Transmitting
antenna × 4

FIG. 1

Transmitting and
receiving shared
antenna array (4 ×
4)

Scanning
direction

(a)

Transmitting antenna
array (4 × 4)

Scanning
direction

Receiving antenna
array (4 × 4)

Scanning
direction

(b)

FIG. 2

Radar transmitting
antenna × 4

Transmitting and
receiving shared
communication
antenna array (4
× 4)

Radar
receiving
antenna × 4

Radar
receiving
antenna × 4

Radar transmitting
antenna × 4

FIG. 3

Integrated radar
communication device 100

Multi-beam scanning

Detection
target 300

Wireless communication

Intelligent
vehicle 200

Wireless communication

Communication
device 400a

Communication
device 400b

FIG. 4

Intelligent vehicle 200

Traveling
system 202

Engine 218

Energy source
219

Transmission
apparatus 220

Wheel 221

Sensing system
204

Positioning system
222

Inertial measurement
unit 224

Radar 226

Laser rangefinder
228

Camera 230

Computer vision
system 232

Control system
206

Steering system 240

Accelerator 234

Brake unit 236

Peripheral device 208

Wireless
communication
system 246

Vehicle-mounted
computer 248

Microphone 250

Speaker 252

Power supply 210

User interface 216

Computer device 212

Processor 213

Memory
214

Instructions 215

FIG. 5

FIG. 6

Electronic device 1000

First antenna array

1011

Second antenna array

1012

FIG. 7

FIG. 8

FIG. 9

Second antenna
element 1

Second antenna
element 2

First antenna array
(first antenna elements
in M rows × N columns)

Second antenna
element 4

Second antenna
element 3

FIG. 10a

Second antenna
element 3

First antenna array
(first antenna elements in
M rows × N columns)

Second antenna
element 1

Second antenna
element 2

Second antenna
element 4

FIG. 10b

Second antenna
element 1
(a first multiplexed
antenna element 1)

Second antenna
element 2
(a first multiplexed
antenna element 2)

First antenna array
(first antenna elements in
M rows × N columns)

Second antenna
element 4
(a first multiplexed
antenna element 4)

Second antenna
element 3
(a first multiplexed
antenna element 3)

FIG. 10c

Second antenna
elements in two rows
× two columns
(an upper left vertex)

Second antenna
elements in two rows
× two columns
(an upper right vertex)

First antenna array
(first antenna elements in
M rows × N columns)

FIG. 10d

Second antenna element 3
(a first multiplexed
antenna element 3)

Second antenna
element 1
(a first multiplexed
antenna element 1)

First antenna array
(first antenna elements
in M rows × N columns)

Second antenna
element 2
(a first multiplexed
antenna element 2)

Second antenna element 4
(a first multiplexed
antenna element 4)

FIG. 10e

Second antenna array
(multiplexing all first antenna elements
on four sides of a first antenna array)

First antenna array
(first antenna elements in
M rows × N columns)

FIG. 10f

Second antenna element 1

First antenna array

Second antenna element 2

Four vertically arranged antennas

First antenna elements in M rows

Second antenna element 4

Second antenna element 3

First antenna elements in N columns

FIG. 11

| | Communication mode | Radar mode |
|---|---|---|
| Antenna layout 1 | First antenna array (communication transmitting and receiving antennas) | Radar receiving antenna 1 ⊠ ⊠ Radar receiving antenna 2 / First antenna array (Radar transmitting antennas) / Radar receiving antenna 3 ⊠ / Radar receiving antenna 4 ⊠ ⊠ |
| Antenna layout 2 | First antenna array (communication transmitting and receiving antennas) | Radar receiving antenna 3 ⊠ / Radar receiving antenna 1 ⊠ First antenna array (Radar transmitting antennas) ⊠ Radar receiving antenna 2 / Radar receiving antenna 4 ⊠ |
| Antenna layout 3 | First antenna array (communication transmitting and receiving antennas) | Radar receiving antenna 1 ⊠ First antenna array (Radar transmitting antennas) ⊠ Radar receiving antenna 2 / Radar receiving antenna 4 ⊠ ⊠ Radar receiving antenna 3 |
| Antenna layout 4 | First antenna array (communication transmitting and receiving antennas) | Radar receiving antenna 3 ⊠ / Radar receiving antenna 1 ⊠ First antenna array (Radar transmitting antennas) ⊠ Radar receiving antenna 2 / Radar receiving antenna 4 ⊠ |

FIG. 12

| Radar transmitting waveform 1 | → | Frequency resource allocation | → | Coding resource allocation | → | Time resource allocation | → | Space resource allocation | → | Radar transmitting beam 1 |

⋮

| Radar transmitting waveform n | → | | | | | | | | | ⋮ Radar transmitting beam n |

**FIG. 13**

Radar transmitting beam 1

Radar transmitting beam 2

First antenna array

| Antenna subarray 1 | Antenna subarray 2 |
| Antenna subarray 4 | Antenna subarray 3 |

Radar transmitting beam 4

Radar transmitting beam 3

**FIG. 14**

FIG. 15a

FIG. 15b

FIG. 15c

FIG. 16a

FIG. 16b

FMCW/PMCW/OFDM waveform control module

Time domain coding → FMCW output

Time domain synchronous coding → PMCW output

Frequency domain coding → Frequency domain subcarrier allocation → IFFT → OFDM output

FIG. 17

FIG. 18

FMCW/PMCW/OFDM waveform compression module

ADC data

Time domain code compensation → Range FFT → Doppler FFT → FMCW output

Time domain synchronous code compensation → Doppler FFT → PMCW output

Frequency domain subcarrier selection → Frequency domain code compensation → IFFT → Doppler FFT → OFDM output

Range-Doppler map

Process of calculating a range-Doppler map corresponding to a radar receiving beam

Range spectrum

Range-Doppler spectrum

Slow-time
FFT

Calculate a fast-time
range spectrum

Calculate a fast-time
range spectrum

Calculate a fast-time
range spectrum

| Radar echo 1 | Radar echo 2 | ... | Radar echo n |

Time

FIG. 19

EP 4 407 346 A1

FIG. 20

EP 4 407 346 A1

120-degree horizontal FoV

30-degree
vertical FoV

FoV

FIG. 21

Horizontal beam
scanning direction

Vertical beam
scanning direction

FoV

FIG. 22a

Center
frequency
1
Horizontal
beam

Center
frequency
2
Horizontal
beam

...

Center
frequency
10
Horizontal
beam

Center
frequency
1
Horizontal
beam

Center
frequency
2
Horizontal
beam

...

Center
frequency
10
Horizontal
beam

Center
frequency
1
Horizontal
beam

Center
frequency
2
Horizontal
beam

...

Center
frequency
10
Horizontal
beam

Code
division
vertical
beams
30 × 4 = 120

FoV1

FoV2

FoV3

Time division beams 1
(120 × 10 = 1200)

Time division beams 2
(120 × 10 = 1200)

Time division beams 3
(120 × 10 = 1200)

FIG. 22b

FIG. 23a

FIG. 23b

FIG. 23c

FIG. 24

## INTERNATIONAL SEARCH REPORT

| International application No. |
|---|
| **PCT/CN2021/126105** |

**A. CLASSIFICATION OF SUBJECT MATTER**

G01S 13/88(2006.01)i; H04B 1/50(2006.01)i

According to International Patent Classification (IPC) or to both national classification and IPC

**B. FIELDS SEARCHED**

Minimum documentation searched (classification system followed by classification symbols)

G01S; H04B; H04L

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 雷达, 通信, 一体化, 复用, 共用, 天线, 模式, 信号, 发射, 接收, 收发, 回波, radar, communication, integrated, multiplex, shared, antenna, model, signal, transmit, emit, receive, echo

**C. DOCUMENTS CONSIDERED TO BE RELEVANT**

| Category* | Citation of document, with indication, where appropriate, of the relevant passages | Relevant to claim No. |
|---|---|---|
| A | CN 106772336 A (XIDIAN UNIVERSITY) 31 May 2017 (2017-05-31) description, paragraphs 34-61, and claims 1-5 | 1-16 |
| A | CN 109932691 A (NANJING UNIVERSITY OF AERONAUTICS AND ASTRONAUTICS) 25 June 2019 (2019-06-25) entire document | 1-16 |
| A | CN 112763986 A (CHENGDU SIWEI WISDOM ELECTRONIC TECHNOLOGY CO., LTD.) 07 May 2021 (2021-05-07) entire document | 1-16 |
| A | US 2014315506 A1 (QUALCOMM INC.) 23 October 2014 (2014-10-23) entire document | 1-16 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 June 2022** | **24 June 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/126105**

| Patent document cited in search report | | | Publication date (day/month/year) | Patent family member(s) | | | Publication date (day/month/year) |
|---|---|---|---|---|---|---|---|
| CN | 106772336 | A | 31 May 2017 | None | | | |
| CN | 109932691 | A | 25 June 2019 | None | | | |
| CN | 112763986 | A | 07 May 2021 | None | | | |
| US | 2014315506 | A1 | 23 October 2014 | WO | 2014172150 | A1 | 23 October 2014 |

Form PCT/ISA/210 (patent family annex) (January 2015)